# EUROPÄISCHE PATENTSCHRIFT

(11) **EP 1 561 055 B1**
(45) Veröffentlichungstag und Bekanntmachung des Hinweises auf die Patenterteilung: **14.06.2006**
(21) Anmeldenummer: 03778314.9
(22) Anmeldetag: 11.11.2003
(51) Int. Cl.: F16H 63/20

(54) **SCHALTVORRICHTUNG FÜR EIN GETRIEBE**
SHIFTING DEVICE FOR A TRANSMISSION
DISPOSITIF DE CHANGEMENT DE VITESSE POUR BOITE DE VITESSES

(30) Priorität: 16.11.2002 DE 10253471
(43) Veröffentlichungstag der Anmeldung: 10.08.2005
(73) Patentinhaber: ZF FRIEDRICHSHAFEN AG, 88038 Friedrichshafen (DE)
(72) Erfinder: BEER, Uwe, 14476 Fahrland (DE); DRABEK, Michael, 14778 Schenkenberg (DE)
(86) Internationale Anmeldenummer: PCT/EP2003/012585
(87) Internationale Veröffentlichungsnummer: WO 2004/046588

(56) Entgegenhaltungen:
- EP-A- 0 149 020
- DE-A- 10 206 561
- FR-A- 2 815 103
- US-A- 4 335 623

## Beschreibung

Die Erfindung betrifft eine Getriebeschaltvorrichtung mit den Merkmalen des Oberbergriffs des Patentanspruchs 1.

Aus der DE 41 37 143 A1 ist ein mehrstufiges synchronisiertes Vorgelegegetriebe bekannt, bei dem jeweils zwei Gänge einem von mehreren Schaltpaketen zugeordnet sind. Diese Schaltpakete bestehen in der Regel aus axial verschiebbar aber drehfest auf einer Getriebewelle angeordneten Schiebemuffen, die im Zusammenwirken mit benachbart zu diesen Schiebemuffen auf der Welle angeordneten Synchronringen Loszahnräder abbremsen oder beschleunigen und mit dieser Getriebewelle drehfest verbinden können.

Bei diesem bekannten Getriebe sind die einem Schaltpaket zugeordneten zwei Gänge (1. Gang und 3. Gang bzw. 2. Gang und 4. Gang) nicht aufeinander folgende Getriebegänge. Dieser Getriebeaufbau ist mit dem Vorteil verbunden, dass dadurch ein Getriebeschaltsystem geschaffen wird, mit dem eine überschneidende Schaltbetätigung und damit reduzierte Schaltzeiten möglich sind. Nachteilig ist jedoch, dass ein solches Getriebe mit einer Schaltvorrichtung mit H-Schaltkulisse nur schwierig, da ungewohnt, schaltbar ist, da üblicherweise mit einer H-Schaltkulisse in der gleichen Schaltgasse nur aufeinanderfolgende Getriebegänge geschaltet werden.

Darüber hinaus ist aus der EP 10 34 384 B1 ein Zwölfgang-Schaltgetriebe für Nutzfahrzeuge bekannt, bei dem eine Vorschaltgruppe manuell geschaltet wird, während die Haupt- bzw. die Nachschaltgruppe automatisch geschaltet werden. Für die Hauptschaltgruppe und die Nachschaltgruppe sind pneumatische Schalteinrichtungen vorgesehen, die beim Wählen der Schaltgasse des gewünschten Getriebeganges mittels der manuellen Schalteinrichtung entsprechend aktiviert werden. Damit entspricht das erzielte Schaltbild dem eines üblichen Sechsgang-Schaltgetriebes. Nachteilig bei diesem Getriebeaufbau ist jedoch, dass separate pneumatische Schaltvorrichtungen vorgesehen werden müssen, um die Getriebegänge in gewohnter Weise in einem üblichen H-Schaltbild schalten zu können.

Zudem ist aus der DE 30 00 577 eine Schaltvorrichtung für Kraftfahrzeuggetriebe bekannt, bei der ein Handschalthebel in einem HH-Schaltbild geschaltet wird. Hierbei sind auf der Schaltwelle zwei Schaltfinger angeordnet, wobei jeweils nur ein Schaltfinger die vier Gänge des Grundgetriebes schaltet. Beim Wechsel von der zweiten in die dritte Schaltgasse wird ein Schaltventil betätigt, das die Bereichsgruppe schaltet. Beim Schalten in der dritten und vierten Gasse ist dann der zweite Schaltfinger im Eingriff. Nachteilig ist auch hier die separate Aktuatorik der Getriebe-Bereichsgruppe.

Die DE 35 27 390 A1 zeigt außerdem ein handschaltbares Doppelkupplungsgetriebe, bei dem bei Betätigung des Ganghebels in einer Schaltgasse eine der beiden Kupplungen der Doppelkupplung geschlossen wird. Nachteilig bei dieser Schalteinrichtung ist die Beschränkung auf lediglich vier Vorwärtsgänge, wenn rein manuell ohne Fremdkraftunterstützung geschaltet werden soll.

Schließlich ist in der nicht vorveröffentlichten DE 102 31 547 A1 eine Schaltvorrichtung für ein Getriebe beschrieben, bei dem mindestens ein Schaltpaket zwei nicht aufeinander folgenden Übersetzungsstufen des Getriebes zugeordnet ist. Diese Schaltvorrichtung ist mit einer mechanischen Konvertierungsvorrichtung ausgestattet, durch die eine Handschaltvorrichtung mit einer H-Schaltkulisse ein solches Getriebe schalten kann.

Bei dieser Schaltvorrichtung ist der Getriebeschalthebel in einer H- bzw. Mehrfach-H-Schaltkulisse geführt und mit Getriebeschaltwellen gekoppelt, so dass eine Bewegung des Schalthebels in einer Schaltgasse zu einer Verschwenkung der Schaltwelle um deren Längsachse führt. Darüber hinaus ist auf der ersten Schaltwelle ein erstes Zahnrad befestigt, das mit einem zweiten Zahnrad auf einer zweiten Schaltwelle kämmt. Bei einer Drehung der ersten Schaltwelle dreht sich die zweite Schaltwelle daher gegenläufig in die andere Richtung. Bei der Anwahl einer Schaltgasse durch den Getriebeschalthebel werden die beiden Schaltwellen zwangsgekoppelt parallel zu ihrer Längsachse verschoben.

Außerdem verfügen diese beiden Schaltwellen über Schaltfinger, die in Abhängigkeit von dem eingelegten Getriebegang in gangindividuelle Vertiefungen von Schaltstangen greifen, welche mit Schaltgabeln verbunden sind. Diese Schaltgabeln stehen ihrerseits mit den Schiebemuffen der Schaltpakete in Verbindung, die zur drehfesten Verbindung von Losrädern mit einer Getriebewelle bei einer Schaltbetätigung axial auf der jeweiligen Getriebewelle verschoben werden.

Wenngleich diese nicht vorveröffentlichte Schaltvorrichtung mit dem Vorteil verbunden ist, dass beispielsweise ein Doppelkupplungsgetriebe mit der beschriebenen Gang- und Schaltpaketanordnung unter Beibehaltung fast aller seiner Komponenten auch als Handschaltgetriebe nutzbar und mit einer H- bzw. Mehrfach-H-Schaltkulisse schaltbar ist, so gestaltet sich der Aufbau der Schaltvorrichtung jedoch als mechanisch aufwendig.

Die an die Erfindung gestellte Aufgabe ist es daher, eine Getriebeschaltvorrichtung der aus der DE 102 31 547 A1 oder der gattungsbildenden FR 2 815 103 bekannten Art vorzustellen, mit der die genannten Vorteile erreichbar sind, die jedoch weniger komplex in ihrem mechanischen Aufbau ist.

Die Lösung dieser Aufgabe ergibt sich aus den Merkmalen des Hauptanspruchs, während vorteilhafte Weiterbildungen und Ausgestaltungen der Erfindung den Unteransprüchen entnehmbar sind.

Die erfindungsgemäße Schaltvorrichtung ist demnach für ein mehrstufiges Getriebe vorgesehen, bei dem wenigstens ein Schaltpaket zwei nicht aufeinander folgenden Übersetzungsstufen zugeordnet ist. Jedes dieser Schaltpakete ist dabei zunächst über Schaltstangen und/oder Schaltseile mit einem Getriebeschalthebel gekoppelt und durch diesen betätigbar. Dem Schalthebel ist bei dieser Schaltvorrichtung zudem ein Schaltbild zugeordnet, bei dem sich zwei aufeinander folgende Übersetzungsstufen in einer Schaltgasse im wesentlichen gegenüber liegen und bei dem die innerhalb einer Schaltgasse auswählbaren Übersetzungsstufen unterschiedlichen Schaltpaketen zugeordnet sind.

Um nun bei diesem Schaltbild das beschriebene Getriebe mit dem Schalthebel schalten zu können, ist dieser mit einer besonderen mechanischen Konvertierungsvorrichtung verbunden. Diese Konvertierungsvorrichtung ermöglicht es, dass eine Schalthebelbewegung in einer Schaltgasse zum Herausnehmen eines bisherigen Getriebeganges auch zu einem Herausnehmen des bisherigen Getriebeganges im Bereich eines ersten Getriebeschaltpaketes führt. Zudem führt eine Schalthebelbewegung in der gleichen Schaltgasse zum Einlegen des neuen Ganges auch zum Einlegen dieses neuen Ganges im Bereich eines zweiten Getriebeschaltpaketes.

Diese Konvertierungsvorrichtung ist nun erfindungsgemäß so ausgebildet, dass der Schalthebel mit nur einer axial verschiebbaren und radial verschwenkbaren Schaltfingerwelle gekoppelt ist, die die Öffnung von jeweils mit Schaltstangen verbundenen Schaltrahmen durchdringt. Darüber hinaus ist an der Schaltfingerwelle wenigstens ein Schaltfinger pro Übersetzungsstufe bzw. Schaltrahmen angeordnet und in jedem der Schaltrahmen im Bereich ihrer Öffnung wenigstens eine Aussparung ausgebildet, die jeweils einem der Schaltfinger auf der Schaltwelle zugeordnet ist.

Vorteilhafterweise erfolgt das gleichzeitige Aus- und Einlegen der Gänge einer Gasse über gegenüberliegende Finger auf der Schaltwelle. Somit werden gegenläufige, translatorische Bewegungen von zwei gleichzeitig zu schaltenden Schaltelementen über eine Schaltwellendrehung mit gleichbleibendem Richtungssinn erzeugt.

Bei einer Bewegung des Schalthebels in der Wählgasse der Schaltvorrichtung bis zu einer Schaltgassenposition erfolgt damit einhergehend eine Axialverschiebung der Schaltfingerwelle, bei der einer der Schaltfinger in eine Aussparung eines der Schaltrahmen greift. Eine Bewegung des Schalthebels in einer Schaltgasse führt dagegen zu einer Radialverschwenkung der Schaltfingerwelle um ihre Längsachse zum Einlegen oder Herausnehmen eines Getriebeganges, bei der wenigstens ein Schaltfinger einen Schaltrahmen und die damit verbundenen Schaltstangen axial verschiebt.

Durch diesen konstruktiven Aufbau unterscheidet sich die erfindungsgemäße Schaltvorrichtung sehr vorteilhaft von der Schaltvorrichtung gemäß der nicht vorveröffentlichten DE 102 31 547 A1, da im Gegensatz zu dieser bekannten Schaltvorrichtung in einem mechanisch weniger komplexen Aufbau nur eine statt zwei Schaltfingerwellen benötigt werden, um das gleiche technische Ergebnis zu erzielen.

In Ausgestaltung der Erfindung kann vorgesehen sein, dass die Öffnung der mit den Schaltstangen verbundenen Schaltrahmen und/oder die Umfangsgeometrie der Schaltrahmen im wesentlich oval, kreisförmig oder rechteckig ausgebildet ist. Als besonders vorteilhaft wird es angesehen, wenn die Schaltstangen und die Schaltrahmen als ein Bauteil und damit einstückig ausgebildet sind.

Darüber hinaus kann vorgesehen sein, dass die Schaltstangen mit Schaltschwingen verbunden sind, die jeweils in eine auf einer Getriebewelle axial verschiebbar und drehfest angeordneten Schiebemuffe eines Schaltpaketes greifen.

Besonders vorteilhaft ist die erfindungsgemäße Konvertierungsvorrichtung dann ausgebildet, wenn jedem der Schaltrahmen zwei Schaltfinger zugeordnet sind. Dabei können die beiden einem Schaltrahmen zugeordneten Schaltfinger auf der Schaltfingerwelle am gleichen Ort oder auch axial hintereinander und derart angeordnet ein, dass diese im wesentlichen radial in die gleiche oder in entgegengesetzte Richtungen weisen.

Für ein bestimmtes Schaltgetriebe sind die Schaltstangen mit ihren Schaltrahmen in der Konvertierungsvorrichtung so hintereinander angeordnet, dass dem Schaltrahmen zum Betätigen des Rückwärtsganges und ggf. zum Betätigen eines siebten Ganges der Schaltrahmen zum Betätigen des ersten und dritten Ganges, der Schaltrahmen des vierten und fünften Ganges und der Schaltrahmen des zweiten und sechsten Ganges folgen.

Die Aussparung in den jeweiligen Schaltrahmen ist vorzugsweise so ausgebildet, dass diese in Schaltrichtung eine Schaltkontur und in entgegengesetzter Richtung eine Freigangkontur aufweist, die mit dementsprechend ausgerichteten Schaltkonturen an den Schaltfingern zusammenwirken.

Um nun sicherzustellen, dass nur der von dem Schalthebel gewählte Getriebegang eingelegt und dazu der jeweils zugehörige Schaltfinger ausschließlich nur in einer vorgegebenen Stellung der Schaltfingerwelle in die jeweils zugeordnete Aussparung in den Schaltrahmen eingeführt werden kann, ist in Ausgestaltung der Erfindung vorgesehen, dass an den Schaltfingern und/oder an den den Schaltfingern zugeordneten Stellen der Schaltfingerwelle Vertiefungen mit vorzugsweise schrägen Seitenwänden ausgebildet sind, in die ein Sperrmittel zur Freigabe eines Schaltvorgangs eingreift. Das Sperrmittel ist dazu vorzugsweise als ein an dem jeweiligen Schaltrahmen ausgebildeter und zur Schaltfingerwelle weisender Nocken ausgebildet, der jeweils nur einen solchen Schaltfinger in die Aussparung eines Schaltrahmens hineinfahren lässt, der dafür vorgesehen ist.

Hinsichtlich des Schaltbildes der erfindungsgemäßen Schaltvorrichtung ist vorzugsweise vorgesehen, dass dieses als "H" oder Mehrfach "H" ausgebildet ist, bei dem sich die Schaltstellungen im wesentlichen gegenüberliegen und bei dem jeder Schaltgasse mindestens zwei Schaltpakete im Getriebe zugeordnet sind.

Die Schaltfingerwelle mit ihren Schaltfingern sowie die Schaltrahmen sind hinsichtlich eines besonders kompakten Aufbaus der Konvertierungsvorrichtung so ausgebildet, dass bei einem axialen Verschieben der Schaltfingerwelle wenigstens ein Schaltfinger aus einer Eingriffsposition in der Aussparung eines Schaltrahmens gebracht wird, während gleichzeitig im Sinne einer Schaltgassenwahl wenigstens ein anderer Schaltfinger in die Aussparung wenigstens eines anderen Schaltrahmens eintaucht.

Ein radiales Verschwenken der Schaltfingerwelle um ihre Längsachse führt dagegen zu einem axialen Verschieben wenigstens eines Schaltrahmens und der mit ihm verbundenen Schaltstangen, so dass ein Getriebegang herausgenommen und/oder eingelegt wird. Dabei können die axialen Bewegungen der genannten Schaltrahmen in die gleiche oder auch in entgegengesetzte Richtungen weisen.

Nach einem anderen Aspekt der Erfindung kann durch geschickte Auslegung der Schaltgeometrie der Aussparung in den Schaltrahmen das Kraftübersetzungsverhältnis der Schaltvorrichtung eingestellt werden, so dass beispielsweise für unterschiedliche Getriebegänge unterschiedliche Schaltkräfte notwendig sein können. Dabei begrenzt lediglich die Bauteilfestigkeit die maximal einzustellende Schaltkraft.

Darüber hinaus kann durch unterschiedliche Längen der Schaltfinger jeweils ein gangindividueller Synchronweg erzeugt werden.

Schließlich kann gemäß einer weiteren vorteilhaften Ausbildung der Erfindung vorgesehen sein, dass die Schaltvorrichtung anstatt manuell mittels hilfskraftgestützter Stellvorrichtungen betätigbar ist, wobei im letzteren Fall die Stellvorrichtungen vorzugsweise als Kolben-Zylinder-Anordnungen ausgebildet sind, die zu einem automatisierten Schaltgetriebe oder zu einem automatischen Doppelkupplungsgetriebe gehören. Bei einem solchen Aufbau dient jeweils eine Kolben-Zylinder-Anordnung zum axialen Verschieben und eine andere Kolben-Zylinder-Anordnung zum Verschwenken der Schaltfingerwelle. Selbstverständlich kann bei einem derartigen vorgeschlagenen automatisierten oder auch bei einem automatischen Getriebe der Handschalthebel mit einer H-oder Mehrfach-H-Schaltkulisse entfallen. Stattdessen wird eine Schaltwippe oder ein anderes geeignetes Schaltmittel zum Wählen der Gänge verwendet.

Der axiale Abstand zwischen zwei Schaltrahmen entspricht wenigstens einer Schaltfingerbreite. Damit wird vorteilhafterweise erreicht, dass einerseits die Schaltrahmen möglichst kompakt zueinander angeordnet sind und andererseits ein Schaltfinger in den Zwischenraum zwischen zwei Schaltrahmen einschwenken kann, wenn dieser zur Betätigung eines Schaltrahmens nicht benötigt wird.

In einer Weiterbildung der Erfindung wird vorgeschlagen, dass in der Schaltkulisse bei einem Schaltgassenwechsel eine Bewegbarkeit des Schalthebels zugelassen wird, bei der der Schalthebel in der Wählgasse im wesentlichen diagonal bewegbar ist. Dies wird dadurch erreicht, dass entweder die Kontur der Schaltrahmen oder die Kontur des Eingriffsbereichs der Schaltfinger entsprechend ausgebildet ist, so dass eine diagonale Bewegungsrichtung des Schalthebels ermöglicht wird. Dabei kann auch die Breite des Eingriffsbereichs der Schaltfinger kleiner ausgebildet sein als die Breite des Schaltfingers im Bereich seiner Nabe.

In einer weiteren bevorzugten Ausbildung der Erfindung wird vorgeschlagen, dass die Schaltfinger auf der Schaltfingerwelle derart angeordnet sind, dass die Schaltfinger in Neutralposition des Getriebes nicht senkrecht zu den Schaltstangen bzw. den Schaltrahmen verlaufen, sondern schräg zu den Schaltstangen bzw. Schaltrahmen angeordnet sind.

Zum Einlegen eines Gangs durch Betätigung des Schalthebels wird der betreffende Schaltfinger dann in eine Position verschwenkt, welche im wesentlichen senkrecht zur Schaltstange bzw. zum Schaltrahmen angeordnet ist.

In einer weiteren vorteilhaften Ausgestaltung der Erfindung wird vorgeschlagen, dass ein Schaltfinger zur Betätigung eines Schaltpakets bzw. zum Ein- und Auslegen von zwei Gängen vorgesehen ist und mit einem Schaltrahmen zusammenwirkt. Damit wird vorteilhafterweise eine kompakte Bauweise vorgeschlagen, welche wenig Teile benötigt.

Vorteilhafterweise wirkt bei der vorgeschriebenen Bauweise der eine Schaltfinger zur Betätigung eines Schaltpakets mit einer Aussparung eines Schaltrahmens zusammen.

Entgegen der vorbeschriebenen Bauweise mit mehreren Schaltfingern pro Schaltrahmen ist es bei der Anordnung eines Schaltfingers in einem Schaltrahmen vorteilhafterweise möglich, dass der Schaltfinger zur Betätigung eines Schaltrahmens auf der Schaltfingerwelle derart angeordnet ist, dass der Schaltfinger in Neutralposition des Getriebes im wesentlichen senkrecht zur Schaltstange bzw. zum Schaltrahmen verläuft. Zum Einlegen eines Gangs durch Betätigung des Schalthebels wird der Schaltfinger in eine Position verschwenkt, welche im wesentlichen einen Winkel aufweist, der nicht senkrecht zur Schaltstange bzw. zum Schaltrahmen angeordnet ist.

Mit der vorbeschriebenen Bauweise der Schaltvorrichtung ist es somit vorteilhafterweise möglich, dass vier Gänge mit zwei Schaltfingern schaltbar sind.

Ebenso ist der Bewegungsablauf eines Schalthebels durch die Geometrie der Schaltrahmen bzw. der Sperrnocken vorgebbar, so dass die Funktion einer Schaltkulisse für einen Handschalthebel vorteilhafterweise auch durch den Schaltrahmen und/oder durch die Sperrnocken abbildbar ist. Dabei kann in einer besonderen Ausbildung der Schaltvorrichtung der Schalthebel beim Wechsel von einer Gangstufe in einer Schaltgasse zu einer benachbarten Gangstufe in einer anderen Schaltgasse in der Wählgasse einen im wesentlichen diagonalen Weg ausführen.

Neben der vorbeschriebenen Schaltvorrichtung erstreckt sich die Erfindung selbstverständlich auch auf Kraftfahrzeuggetriebe, welche eine Schaltvorrichtung mit den vorbeschriebenen Merkmalen enthält. Dabei ist es unerheblich, ob das Getriebe als Handschaltgetriebe mit einem konventionellen Schalthebel, beispielsweise mit einem H-Schaltbild, oder als automatisiertes Schaltgetriebe oder auch als automatisches Getriebe mit einem Wählhebel, einer Schaltwippe oder ähnlichem mit geeigneten Betätigungsmitteln ausgebildet ist.

Das erfindungsgemäße Kraftfahrzeuggetriebe kann auch als Vorgelegegetriebe ausgebildet sein, welches ausschließlich Losräder aufweist, denen jeweils Schaltpakete zu deren drehfester Verbindung mit jeweils einer Getriebewelle zugeordnet sind.

In einer besonders vorteilhaften Ausbildung der Erfindung wird vorgeschlagen, dass das Kraftfahrzeuggetriebe als Doppelkupplungsgetriebe oder auch als Getriebe mit einem Doppelkupplungsradsatz mit nur einer Anfahrkupplung ausgebildet ist.

Die Erfindung lässt sich am besten anhand konkreter Ausführungsbeispiele erklären, welche in den beigefügten Zeichnungen dargestellt sind. Hierin zeigen:
- Fig. 1: eine schematische Darstellung eines Antriebsstranges eines Kraftfahrzeuges,
- Fig. 2: eine schematische Darstellung des Aufbaus eines Doppelkupplungsgetriebes,
- Fig. 3: eine schematische Darstellung des Aufbaus eines Handschaltgetriebes mit einem Doppelkupplungsradsatz,
- Fig. 4: eine dreidimensionale Ansicht einer erfindungsgemäß ausgebildeten Konvertierungsvorrichtung,
- Fig. 5: eine Detailansicht eines Schaltrahmens mit seinen Schaltstangen,
- Fig. 6: eine Darstellung eines Schaltrahmens, der von einer Schaltfingerwelle durchdrungen ist,
- Fig. 7: eine Übersichtsdarstellung der Konvertierungsvorrichtung bei einem Schaltvorgang vom ersten in den zweiten Getriebegang,
- Fig. 8: eine Übersichtsdarstellung der Konvertierungsvorrichtung bei einem Schaltvorgang vom dritten in den vierten Getriebegang,
- Fig. 9: eine Übersichtsdarstellung der Konvertierungsvorrichtung bei einem Schaltvorgang vom fünften in den sechsten Getriebegang,
- Fig. 10: eine Übersichtsdarstellung der Konvertierungsvorrichtung bei einer Schaltung in den Rückwärtsgang,
- Fig. 11: eine Seitenansicht von zwei sehr eng nebeneinander angeordneten Schaltrahmen,
- Fig. 12: einen Schaltrahmen mit deutlich erkennbar profilierten Sperrnocken,
- Fig. 13: eine messtechnisch erzeugtes Bewegungsschaltbild eines Getriebewählhebels,
- Fig. 14: einen Schaltfinger mit reduzierter Eingriffsbreite,
- Fig. 15, 16: eine alternative Ausbildung eines Schaltrahmens mit Schaltstangen und Schaltfingern,
- Fig. 17, 18: eine weitere alternative Ausbildung eines Schaltrahmens mit nur einem Schaltfinger für zwei Gänge und
- Fig. 19 bis 22: zwei eng nebeneinander angeordnete Schaltrahmen zur Schaltung von vier Gängen mit zwei Schaltfingern in perspektivischer Sicht.

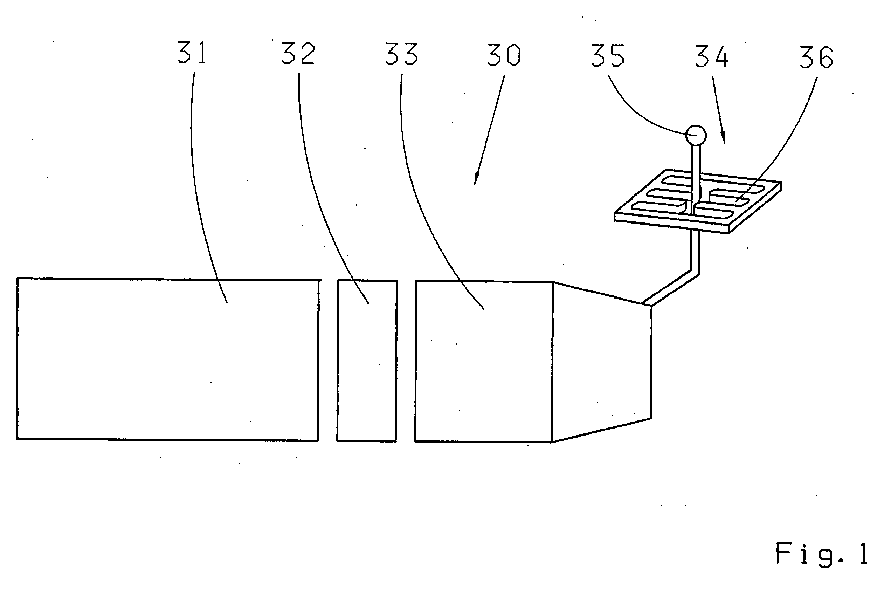

Demnach ist in Fig. 1 der an sich bekannte Aufbau eines Fahrzeugantriebsstranges 30 mit einem Antriebsmotor 31, einer Anfahr- und Schaltkupplung 32 und ein Handschaltgetriebe 33 dargestellt, bei dem das Getriebe 33 mittels einer Handschaltvorrichtung 34 hinsichtlich der Einstellung des Übersetzungsverhältnisses beeinflussbar ist. Dazu verfügt die Schaltvorrichtung 34 über einen Schalthebel 35, der in einer Mehrfach-H-Schaltkulisse 36 geführt ist. Der Schalthebel 35 dieser Schaltvorrichtung 34 ist zudem über ein hier nicht dargestelltes Schaltgestänge oder ein Seilzugsystem mit einer Getriebeschaltwelle verbunden, die im Getriebe 33 gelagert und mit Schaltmitteln gekoppelt ist, mit denen im Getriebe Übersetzungsänderungen vorgenommen werden können.

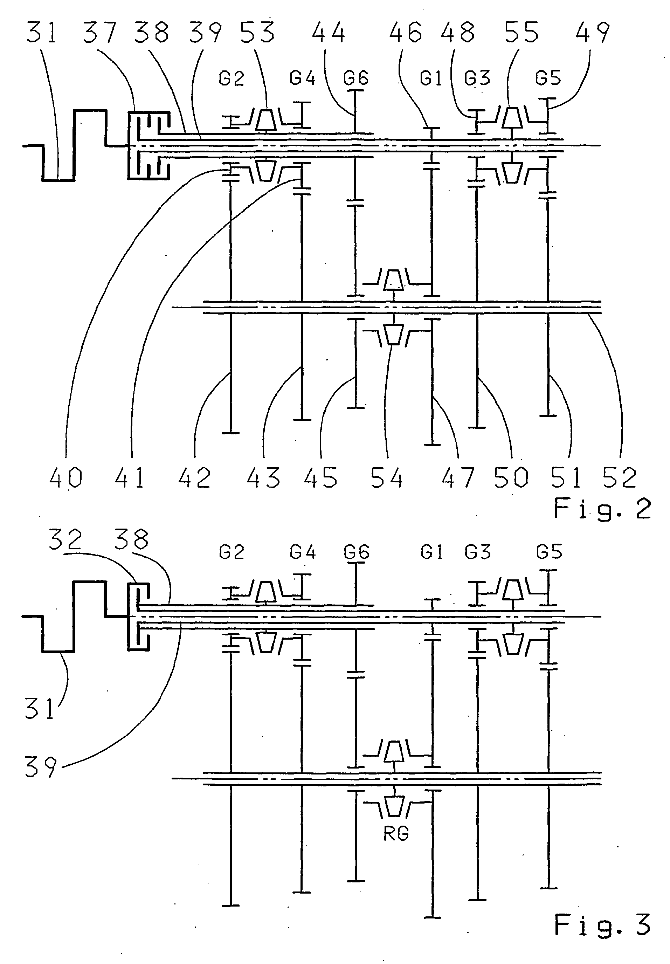

Das von der Schaltvorrichtung 34 hinsichtlich des einzustellenden Übersetzungsverhältnisses zu beeinflussende Getriebe 33 gemäß Fig. 1 kann als Doppelkupplungsgetriebe (Fig. 2) oder als Einkupplungsgetriebe (Fig. 3) ausgebildet sein. In jedem Fall ist es aber ein Getriebe, bei dem zwei nebeneinander angeordnete Gangradpaare durch den Schalthebel 35 in der Schaltvorrichtung 34 nicht in der gleichen Schaltgasse anwählbar sind.

Fig. 2 zeigt demnach in vereinfachter Darstellung den Aufbau eines Doppelkupplungsgetriebes gemäß dem Stand der Technik, das eingangsseitig über eine Doppelkupplung 37 mit dem hier als Brennkraftmaschine ausgebildeten Antriebsmotor 31 antriebswirksam in Verbindung steht. Dazu verfügt das Doppelkupplungsgetriebe eingangsseitig über zwei Getriebeeingangswellen 38, 39, die jeweils mit einer Kupplung der beiden Kupplungen der Doppelkupplung 37 verbunden sind.

Das Doppelkupplungsgetriebe ist darüber hinaus so aufgebaut, dass die geraden Getriebegänge G2, G4, G6 und die ungeraden Getriebegänge G1, G3 und G5 jeweils auf einer der beiden Getriebeeingangswellen liegen. Die Übersetzungsstufen der geraden Gänge befinden sich dabei auf der als Hohlwelle ausgebildeten ersten Getriebeeingangswelle 38, während die ungeraden Gänge auf der in der Hohlwelle 38 gelagerten zweiten Getriebeeingangswelle 39 angeordnet sind.

Die Übersetzungsstufen des zweiten und vierten Ganges G2, G4 werden durch die Losräder 40, 41 auf der ersten Getriebeeingangswelle 38 und den auf einer Vorgelegewelle 52 drehfest angeordneten Festrädern 42, 43 gebildet, während das Festrad 44 auf dieser hohlen Getriebeeingangswelle 38 und das mit diesem kämmende Losrad 45 auf der Vorgelegewelle 52 das Gangradpaar für den sechsten Getriebegang G6 bilden.

Darüber hinaus steht auf der zweiten Getriebeeingangswelle 39 das Festrad 46 mit dem Losrad 47 auf der Vorgelegewelle 52 den ersten Getriebegang G1 bildend im Zahneingriff, während die beiden Losräder 48, 49 auf der zweiten Getriebeeingangswelle 52 mit den Festrädern 50, 51 auf der Vorgelegewelle 52 kämmend den dritten Gang G3 und den fünften Gang G5 bilden.

Weitere Gangzahnräder etwa für einen siebten Gang und den Rückwärtsgang sind hier zur besseren Übersichtlichkeit nicht gesondert dargestellt.

Zwischen den Losrädern 40, 41; 45, 47 sowie 48, 49 sind sogenannte Schaltpakete 53, 54, 55 angeordnet, die im wesentlichen aus axial verschieblichen aber drehfest auf den Wellen 38, 39, 52 angeordneten Schiebemuffen und Synchronringen bestehen, so wie sie aus dem Stand der Technik hinlänglich bekannt sind. Mit Hilfe dieser Schaltpakete 53, 54, 55 lassen sich die jeweiligen Losräder 40, 41, 45, 47, 48, 49 drehfest mit den ihnen zugeordneten Getriebewellen 38, 39, 52 verbinden, so dass alternativ zueinander einzelne Getriebeübersetzungsstufen zu- oder wegschaltbar sind.

Um Lastschaltungen ohne Zugkraftunterbrechung mit einem solchen Doppelkupplungsgetriebe durchführen zu können, wird die Gangstufe des Zielganges bei einer ihr zugeordneten geöffneten Kupplung bereits vor dem eigentlichen Schaltvorgang eingelegt. Während des Schaltvorgangs im Getriebe erfolgt dann eine Überschneidungschaltung, bei der die Kupplung des Zielganges geschlossen und die Kupplung des bisherigen Ganges parallel dazu geöffnet wird. Dabei erfolgt die Drehmomentübergabe des an der Doppelkupplung anliegenden Motordrehmomentes von der bisherigen an die hinzuzuschaltenden Kupplung, wobei sowohl die Ansteuerung der Doppelkupplung 37 als auch der Betätigungsvorrichtungen für die Schiebemuffen der Schaltpakete 53, 54, 55 von einem hier nicht dargestellten Steuergerät automatisch erfolgt.

In Fig. 3 ist ein Doppelkupplungsradsatz gemäß Fig. 2 in einem handgeschalteten Antriebsstrang dargestellt. Dabei ist zwischen der Brennkraftmaschine 31 und dem Getriebe nur eine von dem Fahrer zu betätigende Anfahr- und Schaltkupplung 32 angeordnet, deren Ausgangsseite mit den beiden Getriebeeingangswellen 38, 39 antriebstechnisch in Verbindung steht.

Wenngleich anstelle der beiden Getriebeeingangswellen 38, 39 auch eine einzige Getriebeeingangswelle für dieses Handschaltgetriebe verwendbar ist, so bringt die Nutzung des gleichen Kerngetriebes wie bei dem Doppelkupplungsgetriebe gemäß Fig. 2 einige Kostenvorteile. Der Einsatz einer herkömmlichen Schaltvorrichtung für dieses Getriebe würde jedoch ein Schaltbild in der Schaltkulisse notwendig machen, das für den Fahrer unnatürlich wäre. Dabei würden sich die Gänge G2 und G4 in einer Schaltgasse befinden, während die Gänge G1 und G6 sowie G3 und G5 anderen Schaltgassen anzuordnen wären.

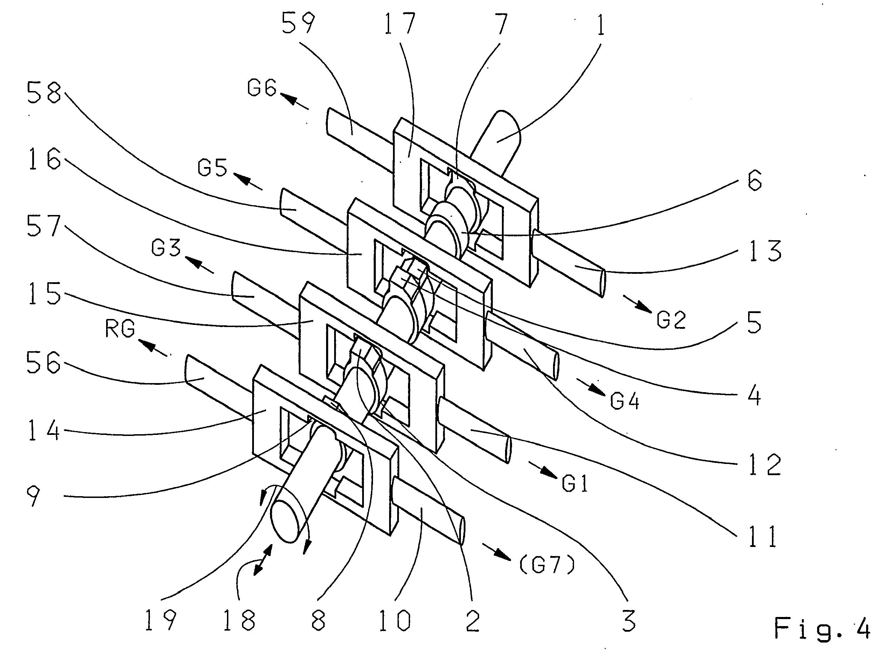

Dieses technische Problem ist daher ein Ausgangspunkt für die erfindungsgemäße Handschaltvorrichtung, mit der unter Nutzung einer H- oder Mehrfach-H-Schaltkulisse ein Getriebe schaltbar ist, bei dem zwei Getriebegänge in der Schaltgasse der Schaltvorrichtung in dem Getriebe eben nicht auf zwei nebeneinander angeordnete und von einer Schiebemuffe betätigbare Gangzahnradpaare treffen. Dazu ist die erfindungsgemäße Schaltvorrichtung mit einer Konvertierungsvorrichtung ausgestattet, die beispielhaft in Fig. 4 dargestellt ist.

Diese Konvertierungsvorrichtung verfügt demnach über eine mit dem Handschalthebel 35 mechanisch gekoppelte Schaltfingerwelle 1, die in Richtung des Pfeils 18 axial verschiebbar sowie entsprechend dem Pfeil 19 um ihre Längsachse verschwenkbar in einem hier nicht dargestellten Getriebegehäuse gelagert ist. Auf der Schaltfingerwelle 1 sind steuernockenartig radial nach außen weisende Schaltfinger 2, 3, 4, 5, 6, 7, 8 ausgebildet oder befestigt, von denen einige in etwa in die gleiche Richtung weisen, während andere Schaltfinger in entgegengesetzte Richtung zeigen. Darüber hinaus sind einige der Schaltfinger 2, 3, 4, 5, 6, 7, 8 unmittelbar oder mit Abstand zueinander hintereinander angeordnet.

Wie Fig. 4 verdeutlicht, durchdringt die Schaltfingerwelle 1 jeweils die Öffnung von in diesem Ausführungsbeispiel rechteckig ausgebildeten Schaltrahmen 14, 15, 16, 17, an deren rechts- und linksseitigen Enden Schaltstangen 10, 11, 12, 13, 56, 57, 58, 59 befestigt sind. Diese Schaltstangen 10, 11, 12, 13, 56, 57, 58, 59 sind an ihrem freien Ende mit hier nicht dargestellten Schaltgabeln verbunden, die in Schiebemuffen der Schaltpakete 53, 54, 55 greifen.

Die Schaltstangen 10, 11, 12, 13, 56, 57, 58, 59 und die Schaltrahmen 14, 15, 16, 17 können jeweils aber auch als ein Bauteil, beispielsweise aus einem Stanzblech hergestellt sein.

Die Schaltrahmen 14, 15, 16, 17 weisen im Bereich ihrer Öffnung je eine Aussparung 9 auf, in der jeweils einer der Schaltfinger 2, 3, 4, 5, 6, 7, 8 bei einem axialen Verschieben der Schaltfingerwelle 1 koaxial zum Richtungspfeil 18 eingreifen kann. Durch ein Verschwenken der Schaltfingerwelle 1 um ihre Längsachse entsprechend dem Richtungspfeil 19 verschiebt dann einer oder mehrere der Schaltfinger 2, 3, 4, 5, 6, 7, 8 einen oder mehrere der Schaltrahmen 14, 15, 16, 17 mit den daran befestigten Schaltstangen 10, 11, 12, 13, 56, 57, 58, 59, wodurch die genannten Schiebemuffen axial verschoben werden. Durch eine systematische Anordnung der Schaltfinger 2, 3, 4, 5, 6, 7, 8 auf der Schaltwelle 1 lässt sich beispielsweise der Rückwärtsgang RG des Getriebes gezielt mit Hilfe des Schaltfingers 9, dem Schaltrahmen 14 und der Schaltstange 56 einlegen.

Darüber hinaus könnte bei Ausbildung einer zweiten Aussparung im Schaltrahmen 14 und der Anordnung eines weiteren Schaltfingers im Bereich des Schaltfingers 8 auf der Schaltwelle 1 mit der Schaltstange 10 auch ein siebter Getriebegang G7 einlegen und herausgenommen werden.

Wie Fig. 4 hinsichtlich des ersten und des dritten Getriebeganges G1 und G3 verdeutlicht, greifen die im wesentlichen einander gegenüberliegenden Schaltfinger 2, 3 in gegenüberliegende Aussparungen des Schaltrahmens 15, bei dessen Axialverschiebung koaxial zu den daran befestigten Schaltstangen 11, 57 der dritte Gang G3 oder der erste Gang G1 betätigbar sind.

Zur Axialverschiebung des Schaltrahmens 16 mitsamt seiner Schaltstangen 12, 58 sind auf der Schaltfingerwelle 1 zwei Schaltfinger 4, 5 unmittelbar hintereinander angeordnet, die wahlweise in die oben liegende Aussparung des Schaltrahmens 16 eingreifen. Durch diesen Aufbau lassen sich der vierte Gang G4 und der fünfte Gang G5 betätigen.

Schließlich zeigt Fig. 4, dass mit den wahlweise in die gegenüberliegenden Aussparungen 9, 9a des Schaltrahmens 17 greifenden Schaltfingern 6, 7 sowie durch die Schaltstangen 13, 59 bei einem Verschwenken der Schaltfingerwelle 1 der sechste Gang G6 und der zweite Gang G2 schaltbar sind.

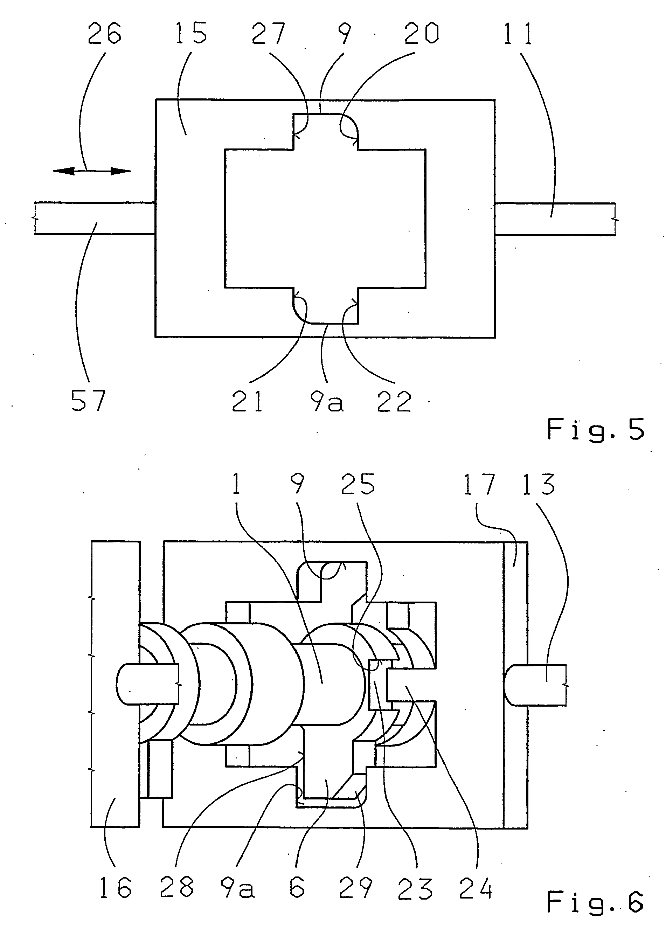

In Fig. 5 ist beispielhaft für alle anderen Schaltrahmen der Schaltrahmen 15 in einer Seitenansicht dargestellt. Mit diesem Schaltrahmen 15 sind die Schaltstangen 11, 57 verbunden, mit deren Hilfe der erste Getriebegang G1 und der dritte Getriebegang G3 über die bereits beschriebenen Schaltpakete 54, 55 betätigbar ist. Wie in dieser Abbildung besonders deutlich wird, sind die beiden Aussparungen 9, 9a in dem Schaltrahmen 15 so ausgebildet, dass diese jeweils eine im wesentlichen radial gradlinige Schaltkontur 22, 27 und eine im wesentlichen gekrümmte Freigangkontur 20, 21 aufweisen.

Diese beiden Konturtypen gestatten es, dass ein in die jeweilige Aussparung 9, 9a eingreifender Schaltfinger 2, 3 mit ähnlicher Außengeometrie (Sperrkontur 28 und gekrümmte oder angeschrägte Freigangkontur 29 am Schaltfinger 6 wie in Fig. 6) in den Schaltrahmen 15 eingreifen und diesen achsparallel zum Richtungspfeil 26 nach links zum Einlegen des dritten Ganges G3 oder zum Einlegen des ersten Ganges G1 nach rechts verschieben kann. Die Freigangkonturen 20, 21 ermöglichen dagegen ein problemloses Herausdrehen der Schaltfinger 2, 3 aus den ihnen zugeordneten Aussparungen 9, 9a.

Sofern in einem Schaltrahmen 15 alternativ zueinander zwei Schaltfinger 2, 3 eingreifen sollen, so sind die Schaltkonturen 22, 27 und die Freigangkonturen 20, 21 in den beiden gegenüberliegenden Aussparungen 9, 9a wie Fig. 5 zeigt entgegengesetzt zueinander ausgerichtet, um bei einem Gangeinlegevorgang das Herausgleiten des jeweils anderen Schaltfingers problemlos zu ermöglichen.

In einer in Fig. 6 gezeigten vorteilhaften Weiterbildung der Erfindung kann außerdem vorgesehen sein, dass an den Schaltfingern 6 oder an den den jeweiligen Schaltfingern zugeordneten Stellen an der Schaltfingerwelle 1 jeweils eine Vertiefung 23 mit schrägen Seitenwänden 25 ausgebildet ist, in die ein Sperrmittel, vorzugsweise ein Sperrnocken 24 eingreifen kann. Dieser Sperrnocken 24 ist vorzugsweise Bestandteil eines jeden Schaltrahmens und ragt radial nach innen auf die Welle 1 gerichtet bzw. in eine seitliche Vertiefung 23 des Schaltfingers 6 ein.

Die Sperrnocken 24 ermöglichen, dass jeweils nur ein ganz bestimmter Schaltfinger 6 und/oder ein beliebiger Schaltfinger nur in einer bestimmten Verdrehstellung der Schaltfingerwelle 1 in die Aussparung 9 eingreifen kann. In allen anderen Verschiebe- oder Verdrehpositionen der Schaltfingerwelle 1 sperrt der jeweilige Sperrnocken 24 den Eingriff in die zugehörige Aussparung 9 des jeweiligen Schaltrahmens 17.

Von besonderem Interesse an dieser Konvertierungsvorrichtung ist nun, dass mit nur einer Steuerwelle (Schaltfingerwelle 1) bei Bedarf sieben Vorwärtsgänge und ein Rückwärtsgang geschaltete werden können. Dazu ist die Anordnung und Ausrichtung der Schaltfinger 2, 3, 4, 5, 6, 7, 8 auf der Schaltfingerwelle 1 sowie die Kopplung der Schaltstangen 10, 11, 12, 13, 56, 57, 58, 59 mit den Schiebemuffen der Schaltpakete 53, 54, 55 so gewählt, dass das Herausnehmen eines Ganges durch den Schalthebel 35 in der Schaltgasse der Schaltvorrichtung 34 zunächst zu einem Herausnehmen des Ganges im Getriebe mit Hilfe eines ersten Schaltrahmens führt. Beim Durchschalten zum nächsten Getriebegang in der gleichen Schaltgasse 34 erfolgt parallel dazu ein Weiterdrehen der Schaltfingerwelle 1 in der gleichen Drehrichtung, die das Einlegen des anderen Ganges der gleichen Schaltgasse im Getriebe mit Hilfe eines zweiten Schaltrahmens bewirkt.

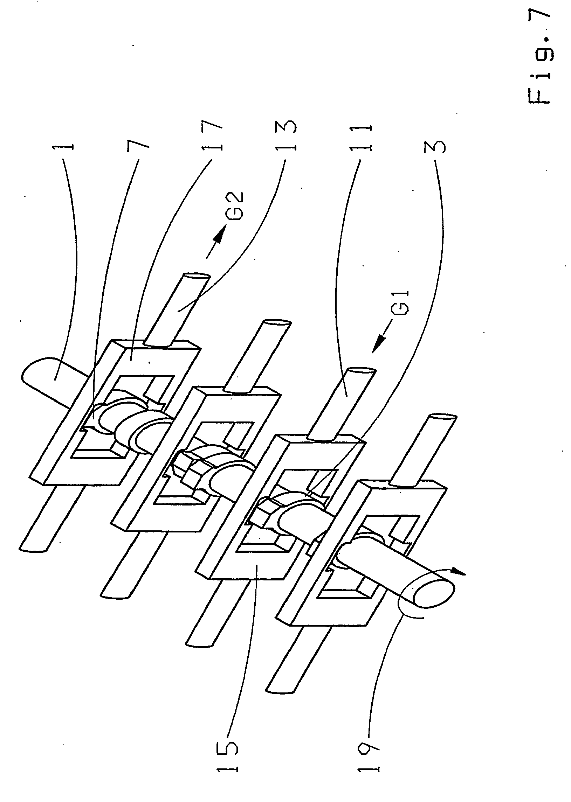

Wie Fig. 7 zeigt, ist bei einem Gangwechsel in der gleichen Schaltgasse vom ersten Gang G1 zum zweiten Gang G2 die Schaltfingerwelle 1 so in den Öffnungen der beiden Schaltrahmen 15, 17 positioniert, dass der Schaltfinger 3 und der Schaltfinger 7 in den Aussparungen der Schaltrahmen 15, 17 eingetaucht sind. Eine Verdrehung der Schaltfingerwelle 1 nach rechts führt dazu, dass sich der Schaltrahmen 15 samt der Schaltstange 11 nach links in eine Neutralposition bewegt, so dass der erste Gang G1 herausgenommen wird. Gleichzeitig bewirkt der Schaltfinger 7 durch sein Verschieben des Schaltrahmens 17, dass sich dieser zusammen mit der Schaltstange 13 aus einer Neutralposition nach rechts bewegt, so dass der zweite Gang G2 eingelegt wird.

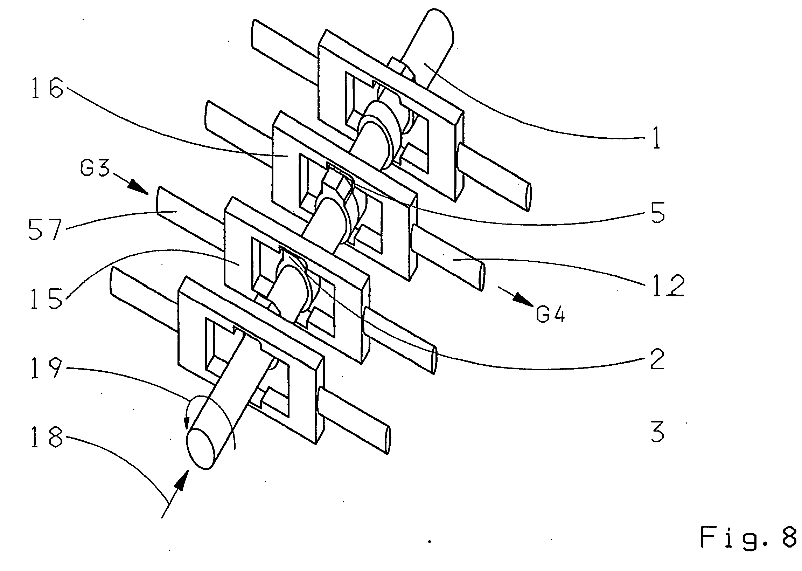

Eine Schaltung vom dritten Gang G3 in den vierten Gang G4 verläuft gemäß Fig. 8 zwar nach dem gleichen Muster, jedoch bewegen sich in diesem Fall die beiden Schaltrahmen 15, 16 bei einer Verschwenkung der Schaltfingerwelle 1 nach links (Pfeil 19) zur rechten Seite. Auf diese Weise wird mit Hilfe der Schaltfinger 2, 5 der dritte Gang G3 herausgenommen und in eine Neutralposition gebracht, während der vierte Gang G4 eingelegt wird.

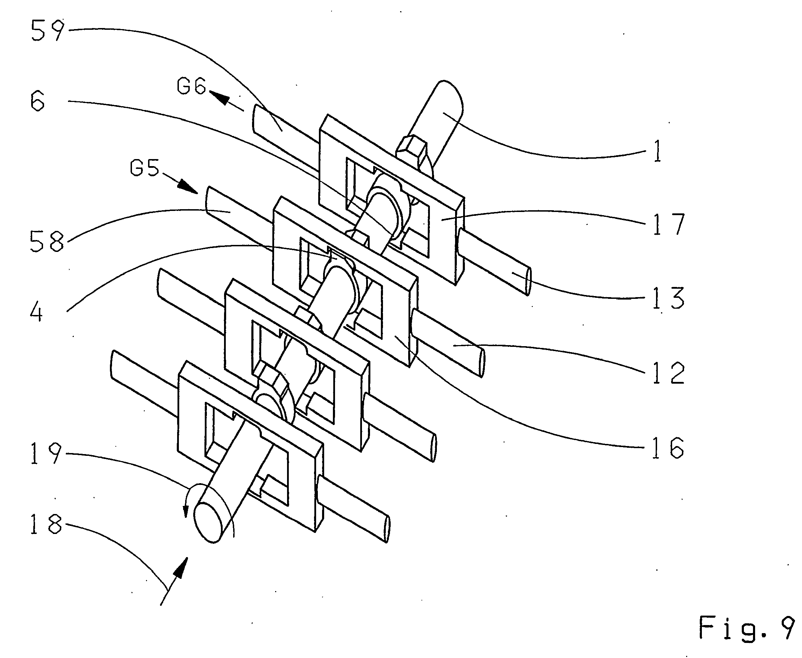

Wie Fig. 9 zeigt, ist die Schaltfingerwelle 1 zur Schaltung vom fünften Gang G5 in den sechsten Gang G6 derartig gemäß Richtungspfeil 18 in den Öffnungen der Schaltrahmen 16, 17 axial verschoben, dass die Schaltfinger 4, 6 in den ihnen zugeordneten Aussparungen dieser Schaltrahmen 16, 17 eingreifen. Ein Verdrehen der Schaltfingerwelle 1 nach rechts gemäß dem Richtungspfeil 19 führt dazu, die Schaltkontur 28 des Schaltfingers 6 an der Schaltkontur des Schaltrahmens 17 anliegt (Fig. 6) und diesen zusammen mit der Schaltstange 59 zum Einlegen des sechsten Ganges G6 nach links aus einer Neutralposition in die Schaltposition befördert, während der Schaltfinger 4 mit seiner Schaltkontur in die Schaltkontur des Schaltrahmens 16 eingreift und diesen Schaltrahmen 17 zum Herausnehmen des fünften Ganges G5 nach rechts verschiebt.

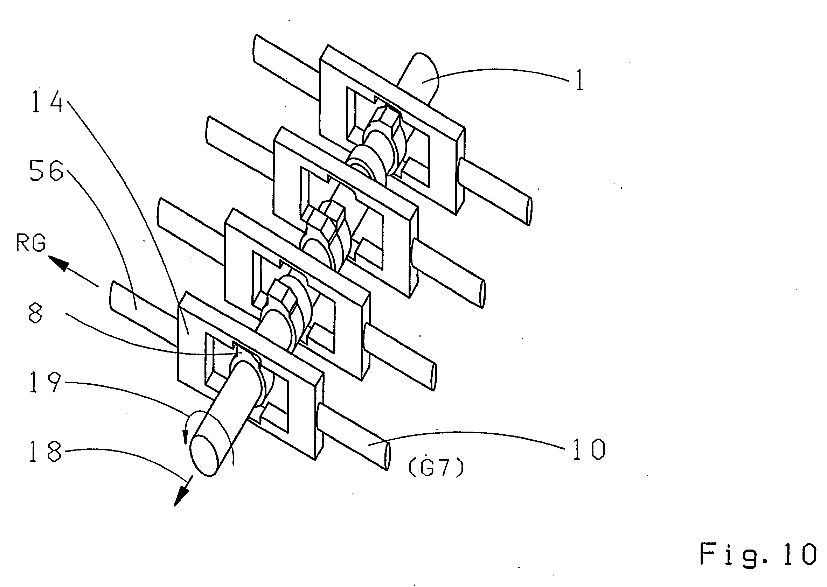

Schließlich zeigt Fig. 10 die Konvertierungsvorrichtung in einer Schaltstellung, bei der die Schaltfingerwelle 1 durch eine entsprechende Gassenwahl des Schalthebels 35 in der Schaltvorrichtung 34 soweit axial in Richtung des Richtungspfeils 18 verschoben ist, dass der Schaltfinger 8 in eine Aussparung in dem Schaltrahmen 14 greift. Bei einem Verdrehen der Schaltfingerwelle 1 nach links gemäß Richtungspfeil 19 verschiebt der Schaltfinger 8 den Schaltrahmen 14 mit seiner Schaltstange 56 nach links, so dass der Rückwärtsgang RG eingelegt wird.

In dieser Fig. 10 wird aber auch angedeutet, dass die rechte Seite des Schaltrahmens 14 auch mit einer Schaltstange 10 verbunden sein kann, mit der beispielsweise der siebte Gang (G7) eines siebengängigen Getriebes geschaltet werden kann. Dazu ist lediglich in dem Schaltrahmen 14 eine weitere Aussparung anzuordnen und auf der Schaltfingerwelle ein weiterer dementsprechend zuzuordnender Schaltfinger auszubilden.

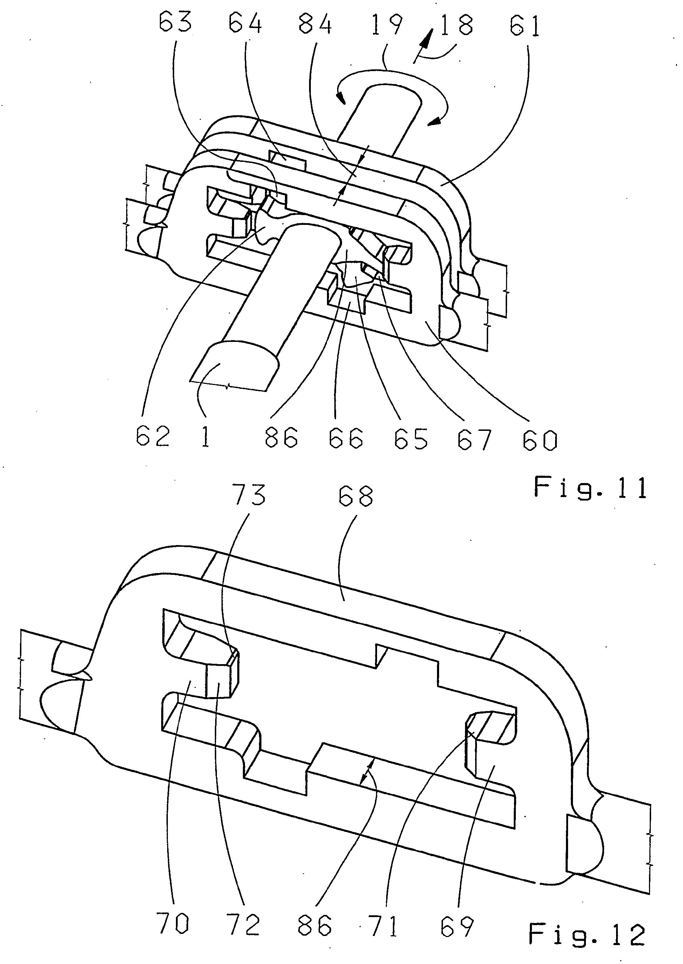

Bei ungünstiger Lage der Gänge in dem Getriebe kann es notwendig sein, dass die Anzahl der Schaltfinger gleichgroß ist wie die Anzahl der Getriebegänge. Sind die Gänge im Getriebeaufbau jedoch so, dass der jeweils übernächste Gang in gleicher Schaltrichtung liegt, so können vier Gänge mit zwei Schaltfingern geschaltete werden, da ein Gassenwechsel erfolgen muss. Wie Fig. 11 zeigt, reduziert sich damit vorteilhaft auch der Mindestabstand zwischen zwei Schaltrahmen von der dreifachen Schaltfingerbreite auf einfache Schaltfingerbreite.

Wie Fig. 11 zeigt, lässt sich die Konvertierungsvorrichtung extrem kurz bauen. In diesem Ausführungsbeispiel der Erfindung sind die beiden Schaltrahmen 60, 61 zur Schaltung des fünften und siebten Ganges bzw. des dritten und ersten Ganges so dicht hintereinander angeordnet, dass deren axialer Abstand nur einer Schaltfingernabenbreite 84 entspricht. Durch diesen Aufbau ist es möglich, dass mit dem auf der Schaltfingerwelle 1 angeordneten Schaltfinger 62 durch Eingreifen in die Aussparung 63 des Schaltrahmens 60 und Verdrehen der Schaltfingerwelle 1 gemäß Richtungspfeil 19 der siebte Gang geschaltet werden kann, während mit dem axial an gleicher Stelle auf der Schaltfingerwelle 1 angeordneten und in die entgegengesetzte Richtung weisenden Schaltfinger 86 der fünfte Gang geschaltet werden kann.

Zum Schalten des ersten oder dritten Ganges wird die Schaltfingerwelle 1 axial in Richtung 18 um eine Schaltfingerbreite verschoben, so dass zum Schalten des ersten Ganges der Schaltfinger 65 in die Aussparung 67 des Schaltrahmens 61 eintauchen und die Schaltwelle axial verdreht werden kann. Zum Einlegen des dritten Ganges wird die Schaltfingerwelle 1 axial am gleichen Ort gehalten und gemäß dem Richtungspfeil 19 in die andere Richtung verdreht, so dass ein hier nicht erkennbarer Schaltfinger in die Aussparung 64 des Schaltrahmens 61 eindringen und diesen nach rechts verschieben kann.

Hinsichtlich der Sperrnockengeometrie verdeutlich die Abbildung des Schaltrahmens 68 in Fig. 12, dass die Oberflächenkontur 71, 72, 73 der Sperrnocken 71, 72 neben der beschriebenen Funktion zur Freigabe eines Schaltfingers zum Eindringen in den Schaltrahmen letztlich auch die Schaltgeometrie beeinflussen, mit der ein Getriebeschalthebel in seiner Schaltkulisse bewegbar ist.

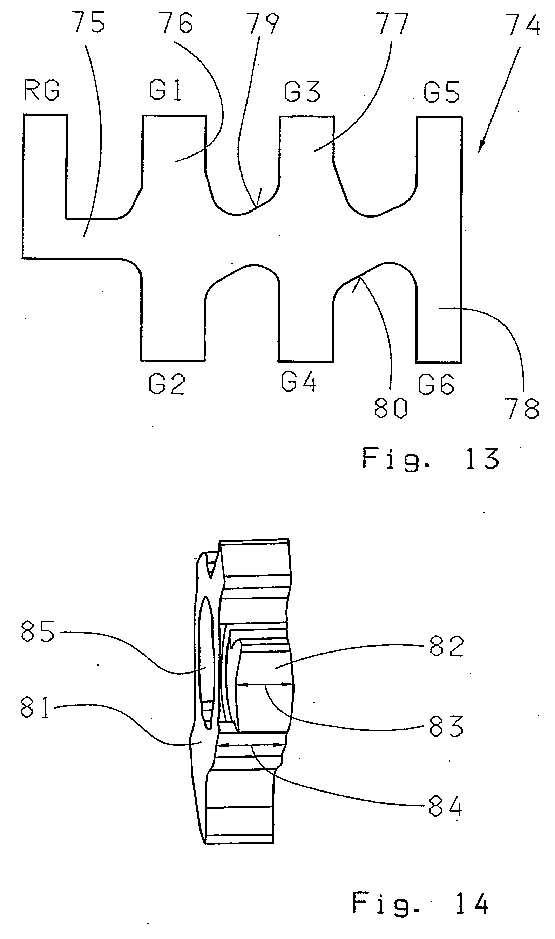

Fig. 13 zeigt dazu anhand eines Messergebnisses den Bewegungsablauf 74 eines mit einer erfindungsgemäßen Konvertierungsvorrichtung verbunden Getriebeschalthebels 35 in seiner Schaltkulisse 36.

Wie leicht erkennbar ist, wurde diese Schaltkulisse 36 als HH-Schaltkulisse ausgebildet, bei der der Schalthebel 35 in einer Wählgasse 75 und vier Schaltgassen bewegbar ist. Die Schaltabläufe in den Schaltgassen 76, 77, 78 zum Schalten des ersten bis sechsten Ganges G1 bis G6 zeigen deutlich, dass die Kontur 71, 72, 73 der Sperrnocken 69, 70 die Form des Diagonalschaltbildes 79, 80 derart beeinflusst, dass sich die Haptik gerade beim Wechsel beispielsweise von einer Schaltgasse G1-G2 zur nächsten Schaltgasse G2-G3 deutlich und für den Fahrer positiv beeinflussen lässt.

Schließlich zeigt Fig. 14, dass zur Erzeugung eines möglichst leichtgängigen Schaltvorganges jeder oder auch nur einige der Schaltfinger 81 in ihrem Eingriffsbereich 82 eine geringere Bauteilbreite 83 aufweisen als im Bereich ihrer Nabe bzw. der Öffnung 85, durch die der Schaltfinger 81 auf der Schaltfingerwelle 1 aufgezogen wird. Zudem ist die Bauteilbreite 83 im Eingriffsbereich 82 der Schaltfinger 81 vorzugsweise so bemessen, dass diese auch kleiner ist als die Breite 86 der Schaltrahmen 68. Darüber hinaus kann auch der Eingriffsbereich 82 der Schaltfinger 81 so ausgebildet sein, dass durch diesen allein oder im Zusammenwirken mit der Sperrnockengeometrie 71, 72, 73 der Sperrnocken 69, 70 in der Wählgasse 75 eine Diagonalschaltbarkeit bei einem Gassenwechsel ermöglicht oder unterstützt wird.

Selbstverständlich kann die erfindungsgemäße Schaltvorrichtung auch zum Schalten eines Getriebes genutzt werden, bei dem auf den Getriebewellen ausschließlich Losräder angeordnet sind, die beispielsweise mittels der beschriebenen Koppelvorrichtungen aus Synchronringen und Schiebemuffen drehfest mit den ihnen zugeordneten Wellen verbunden werden können.

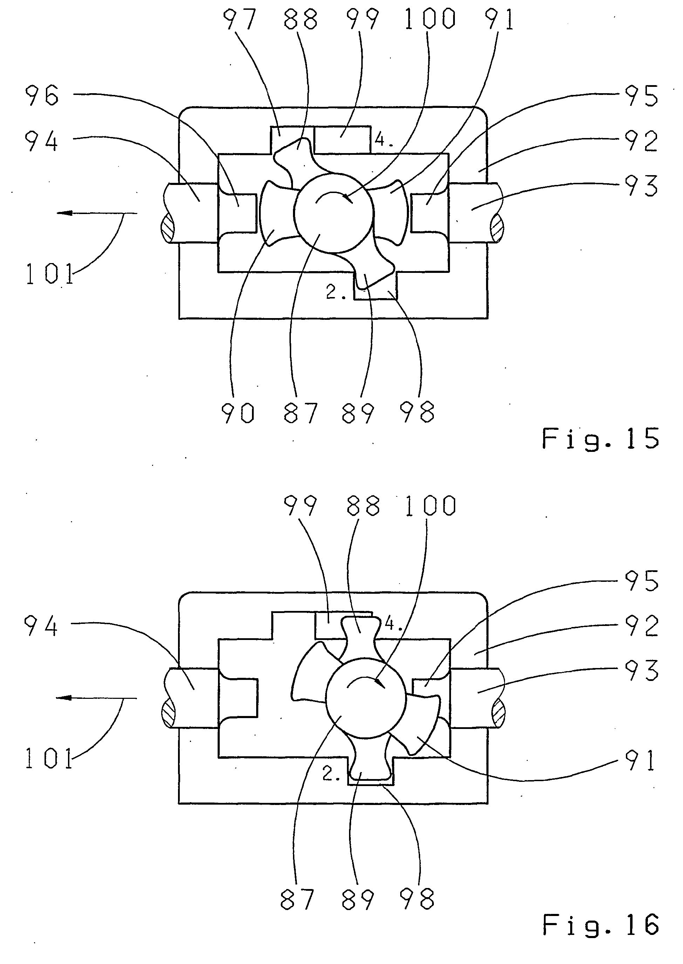

In einer weiteren Ausbildung der Erfindung (Fig. 15, 16) ist eine Schaltfingerwelle 87 gezeigt, deren Schaltfinger 88, 89 in Neutralposition des Getriebes nicht senkrecht in den Ausnehmungen 97, 98 des Schaltrahmens 92 bzw. nicht senkrecht zu den Schaltstangen 93, 94 angeordnet sind. Die Schaltfinger 88, 89 sind im wesentlichen diametral zueinander und axial versetzt zueinander auf der Schaltfingerwelle 87 angeordnet. Sperrfinger 90, 91 sind ebenfalls diametral zueinander, jedoch um einen Winkel verdreht zur Achse der Schaltfinger 88, 89 auf der Schaltfingerwelle 87, vorgesehen. Diese Sperrfinger 90, 91 wirken mit Sperrnocken 95, 96 zusammen, welche sich an die Schaltstangen 93, 94 im Inneren des Schaltrahmens 92 anschließen. Der Schaltrahmen 92 ist seitlich der Ausnehmung 97 mit einer rampenförmigen Fase 99 versehen, so dass durch ein Gleiten des Schaltfingers 88 auf der Rampe 99 eine Schaltkulisse nachgebildet werden kann. Diese Kulissenfunktion kann alternativ auch durch Rampen an den Sperrnocken 95, 96 realisiert werden, wenn diese mit den Schaltfingern 90, 91 zusammenwirken. In der in Fig. 15 gezeigten Position befinden sich die Schaltfinger 88, 89 in Neutralposition in den Ausnehmungen 97, 98. Dies ist erforderlich, da beispielsweise beim Schalten vom zweiten in den dritten Gang, entgegen der gezeigten Drehrichtung 100, weitergedreht werden muß, damit der nicht gezeigte Schaltfinger für den dritten Gang den korrespondierenden Schaltrahmen verschieben und der Schaltfinger 89 für den zweiten Gang aus der Ausnehmung 98 des Schaltrahmens 92 für den zweiten Gang herausschwenken kann.

Zum Einlegen beispielsweise des zweiten Gangs (Fig. 16) wird die Schaltfingerwelle 87 in Drehrichtung 100 weitergedreht, so dass der Schaltfinger 89 in die Ausnehmung 98 für den zweiten Gang einschwenkt und der Schaltrahmen 92 nach links in Richtung 101 verschoben wird. Der Schaltfinger 89 befindet sich bei eingelegtem zweiten Gang senkrecht zur Achse des Schaltrahmens 92 bzw. zu den Achsen der Schaltstangen 93, 94. Der korrespondierende Schaltfinger 88 für den vierten Gang befindet sich in einer Ebene vor dem Schaltrahmen 92 und kann somit senkrecht nach oben geschwenkt werden. Zum Auslegen des zweiten Gangs wird in umgekehrter Reihenfolge verfahren und die Schaltfingerwelle 87, entgegen der gezeigten Drehrichtung 100, so weit gedreht, bis der Schaltfinger 89 aus der Ausnehmung 98 herausschwenkt (siehe auch Fig. 15).

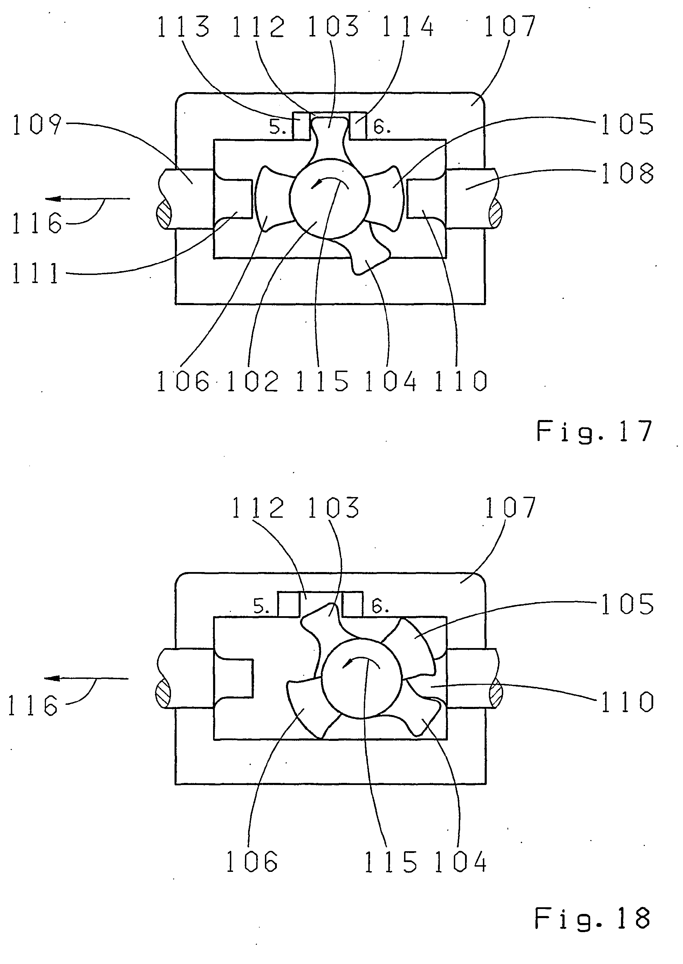

In einer weiteren vorteilhaften Ausbildung (Fig. 17, 18) der Erfindung wird vorgeschlagen, dass lediglich ein Schaltfinger 103 zur Betätigung eines Schaltpakets bzw. zum Ein- und Auslegen von zwei Gängen (beispielsweise Gang fünf und sechs) vorgesehen ist und mit einem Schaltrahmen 107 zusammenwirkt. In Neutralposition befindet sich der Schaltfinger 103 in der Ausnehmung 112 des Schaltrahmens 107 und die Sperrfinger 105, 106 verriegeln die Sperrnocken 110, 111, so dass der Schaltrahmen 107 nicht verschoben werden kann. Bei Drehung der Schaltfingerwelle 102 in Drehrichtung 115 schwenkt der Schaltfinger 103 in der Ausnehmung 112 nach links, so dass der Schaltrahmen 107 in Richtung 116 verschoben und der fünfte Gang eingelegt wird. Während dieser Drehbewegung der Schaltfingerwelle 102 schwenkt der Sperrfinger 105 in eine Ebene vor dem Sperrnocken 110. Der Schaltfinger 104 sowie der Sperrfinger 106 befinden sich bei eingelegtem fünften Gang nicht im Eingriff.

Zum Auslegen des fünften Gangs wird die Schaltfingerwelle 102 entgegen der gezeigten Drehrichtung 115 nach rechts gedreht, so dass der Schaltfinger 103 den Schaltrahmen 102 entgegen der gezeigten Richtung 116 nach rechts in die Neutralposition verschiebt (Fig. 17).

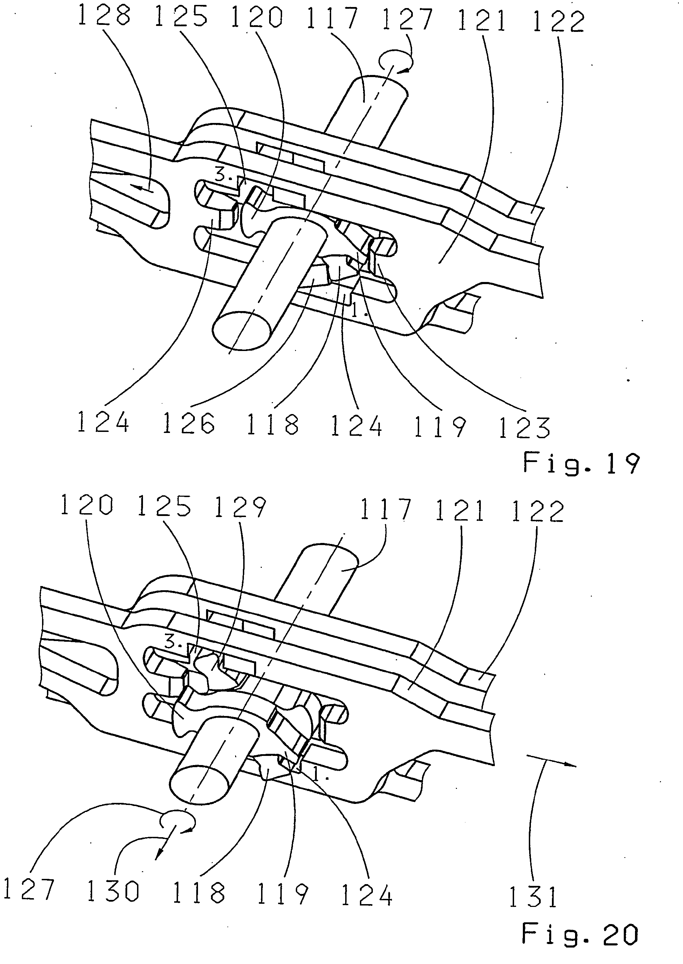

In den nachfolgenden Fig. 19 bis 22 ist eine weitere bevorzugte Ausbildung der Erfindung gezeigt, welche vier Gänge mittels zwei Schaltfinger schaltbar macht. Charakteristisch für eine derartige Ausbildung der Schaltvorrichtung sind zwei dicht nebeneinander angeordnete Schaltrahmen 121, 122, welche mit zwei auf einer Schaltfingerwelle 117 axial zueinander versetzt angeordneten Schaltfingern 118, 129 zusammenwirken. Eine derartige Schaltvorrichtung kann vorteilhafterweise angewendet werden, wenn beispielsweise die ungeraden Gänge eins, drei, fünf (sieben) in dieser Reihenfolge auf einer Getriebeeingangswelle und die geraden Gänge zwei, vier, sechs sowie der Rückwärtsgang in dieser Reihenfolge auf der anderen Getriebeeingangswelle angeordnet sind. In der in Fig. 19 gezeigten Neutralposition befindet sich der Schaltfinger 118 in der Ausnehmung 124 für den ersten Gang, während die Sperrfinger 119, 120 mit den Sperrnocken 123, 124 in Kontakt sind, so dass der Schaltrahmen 121 fixiert und nicht verschiebbar ist. Zum Einlegen, beispielsweise des ersten Gangs, wird die Schaltfingerwelle 117 in Drehrichtung 127 gedreht, so dass einerseits die Sperrfinger 119, 120 die Sperrnocken 123, 124 freigeben und andererseits der Schaltfinger 118 den Schaltrahmen 121 in Richtung 128 verschiebt, so dass der erste Gang eingelegt wird (Fig. 19).

Zum Auslegen des ersten Gangs erfolgt eine Drehung der Schaltfingerwelle 117 entgegen der gezeigten Drehrichtung 127, bis der Schaltfinger 118 sich wieder in der in Fig. 19 gezeigten Position befindet, in der er, entgegen der gezeigten Drehrichtung 127, aus der Ausnehmung 124 des Schaltrahmens 121 nach oben ausschwenken kann.

Zum Einlegen des dritten Gangs (Fig. 20) wird die Schaltfingerwelle 117 axial in Richtung 130 um eine Schaltfingerbreite verschoben. Dadurch kommen die Schaltfinger 118 und Sperrfinger 119, 120 außer Eingriff mit den korrespondierenden Ausnehmungen und Sperrnocken 123, 124 und liegen somit in einer Ebene vor dem Schaltrahmen 121. Der "hintere" Schaltfinger 129 kann somit in die Ausnehmung 125 für den dritten Gang eintauchen. Durch Drehen der Schaltfingerwelle 117 in Richtung 127 schwenkt der Schaltfinger 129 den Schaltrahmen 121 in Richtung 131 nach rechts, so dass der dritte Gang eingelegt wird. Ein Auslegen des dritten Gangs erfolgt in umgekehrter Richtung, entgegen der gezeigten Drehrichtung 127.

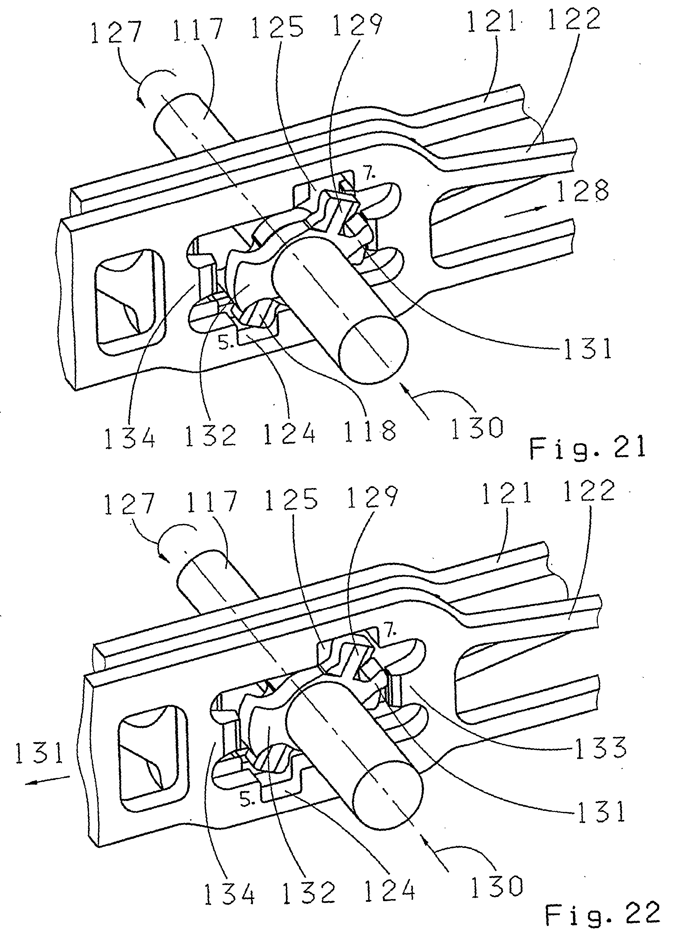

Eine Rückansicht der Schaltrahmen 121, 122 gemäß Fig. 19 und 20 ist in den Fig. 21 und 22 dargestellt, so dass nun der Schaltrahmen 122 als vorderer Schaltrahmen gezeigt ist. In dem Schaltrahmen 122 sind Ausnehmungen 124, 125 zum Schalten des fünften bzw. siebten Gangs angeordnet. Um den fünften Gang zu schalten, befindet sich der nun "hinten" liegende Schaltfinger 118 in der Ausnehmung 124 (Fig. 21). Der Schaltfinger 129 sowie die Sperrfinger 131, 132 befinden sich in einer Ebene vor dem Schaltrahmen 122. Durch Drehung der Schaltfingerwelle 117 in Richtung 127 gegen den Uhrzeigersinn wird der Schaltfinger 118 derart verschwenkt, dass er den Schaltrahmen 122 in Richtung 128 nach rechts verschiebt und der fünfte Gang eingelegt wird.

Zum Schalten des siebten Gangs (Fig. 22) wird die Schaltfingerwelle 117 in Richtung 130 um die Breite eines Schaltfingers derart verschoben, dass der Schaltfinger 129 in die Ausnehmung 125 des Schaltrahmens 122 eintaucht. Die Sperrfinger 131, 132 sind dabei in Kontakt zu den Sperrnocken 133, 134 des Schaltrahmens 122. Durch Drehung der Schaltfingerwelle 117 im Gegen-Uhrzeigersinn 127 wird der Schaltrahmen 122 nach links in Richtung 131 verschoben und der siebte Gang eingelegt. Ein Auslegen des fünften bzw. des siebten Gangs erfolgt in umgekehrter Reihenfolge, wie beschrieben.

### Bezugszeichen

- 1: Schaltfingerwelle
- 2: Schaltfinger
- 3: Schaltfinger
- 4: Schaltfinger
- 5: Schaltfinger
- 6: Schaltfinger
- 7: Schaltfinger
- 8: Schaltfinger
- 9: Aussparung
- 9a: Aussparung
- 10: Schaltstange
- 11: Schaltstange
- 12: Schaltstange
- 13: Schaltstange
- 14: Schaltrahmen
- 15: Schaltrahmen
- 16: Schaltrahmen
- 17: Schaltrahmen
- 18: Axialverschiebung
- 19: Verdrehrichtung
- 20: Freigangkontur
- 21: Schaltkontur
- 22: Freigangkontur
- 23: Vertiefung
- 24: Sperrmittel
- 25: Seitenwand der Vertiefung
- 26: Richtungspfeil
- 27: Schaltkontur
- 28: Schaltkontur am Schaltfinger
- 29: Freigangkontur am Schaltfinger
- 30: Antriebsstrang
- 31: Motor
- 32: Kupplung
- 33: Getriebe
- 34: Schaltvorrichtung
- 35: Schalthebel
- 36: Schaltkulisse
- 37: Doppelkupplung
- 38: Getriebeeingangswelle; Hohlwelle
- 39: Getriebeeingangswelle
- 40: Losrad
- 41: Losrad
- 42: Festrad
- 43: Festrad
- 44: Festrad
- 45: Losrad
- 46: Festrad
- 47: Losrad
- 48: Losrad
- 49: Losrad
- 50: Festrad
- 51: Festrad
- 52: Vorgelegewelle
- 53: Schaltpaket
- 54: Schaltpaket
- 55: Schaltpaket
- 56: Schaltstange
- 57: Schaltstange
- 58: Schaltstange
- 59: Schaltstange
- 60: Schaltrahmen
- 61: Schaltrahmen
- 62: Schaltfinger
- 63: Aussparung
- 64: Aussparung
- 65: Schaltfinger
- 66: Aussparung
- 67: Aussparung
- 68: Schaltrahmen
- 69: Sperrnocke
- 70: Sperrnocke
- 71: Sperrnockenkontur
- 72: Sperrnockenkontur
- 73: Sperrnockenkontur
- 74: Bewegungsablauf
- 75: Wählgasse
- 76: Schaltgasse
- 77: Schaltgasse
- 78: Schaltgasse
- 79: Diagonalschaltbild
- 80: Diagonalschaltbild
- 81: Schaltfinger
- 82: Eingriffsbereich
- 83: Bauteilbreite
- 84: Bauteilbreite
- 85: Öffnung
- 86: Bauteilbreite
- 87: Schaltfingerwelle
- 88: Schaltfinger
- 89: Schaltfinger
- 90: Sperrfinger
- 91: Sperrfinger
- 92: Schaltrahmen
- 93: Schaltstange
- 94: Schaltstange
- 95: Sperrnocken
- 96: Sperrnocken
- 97: Ausnehmung
- 98: Ausnehmung
- 99: Rampe
- 100: Drehrichtung
- 101: Schieberichtung
- 102: Schaltfingerwelle
- 103: Schaltfinger
- 104: Schaltfinger
- 105: Sperrfinger
- 106: Sperrfinger
- 107: Schaltrahmen
- 108: Schaltstange
- 109: Schaltstange
- 110: Sperrnocken
- 111: Sperrnocken
- 112: Ausnehmung
- 113: Rampe
- 114: Rampe
- 115: Drehrichtung
- 116: Schieberichtung
- 117: Schaltfingerwelle
- 118: Schaltfinger
- 119: Sperrfinger
- 120: Sperrfinger
- 121: Schaltrahmen
- 122: Schaltrahmen
- 123: Sperrnocken
- 124: Ausnehmung
- 125: Ausnehmung
- 126: Rampe
- 127: Drehrichtung
- 128: Schieberichtung
- 129: Schaltfinger
- 130: Schieberichtung
- 131: Sperrfinger
- 132: Sperrfinger
- 133: Sperrnocken
- 134: Sperrnocken

- G1: erster Gang
- G2: zweiter Gang
- G3: dritter Gang
- G4: vierter Gang
- G5: fünfter Gang
- G6: sechster Gang
- G7: siebter Gang
- RG: Rückwärtsgang

## Patentansprüche

1. Schaltvorrichtung für ein mehrstufiges Getriebe, bei dem wenigstens zwei Schaltpakete (53, 54, 55) jeweils zwei nicht aufeinander folgenden Übersetzungsstufen zugeordnet sind, bei der jedes dieser Schaltpakete (53, 54, 55) über Schaltstangen und/oder Schaltseile mit einem Schalthebel (35) gekoppelt und durch diesen betätigbar ist, bei der dem Schalthebel (35) ein Schaltbild zugeordnet ist, bei dem sich zwei aufeinander folgende Übersetzungsstufen in einer Schaltgasse im wesentlichen gegenüberliegen, bei der die innerhalb einer Schaltgasse auswählbaren Übersetzungsstufen unterschiedlichen Schaltpaketen zugeordnet sind, und bei der der Schalthebel (35) und die Schaltpakete (53, 54, 55) mit einer Konvertierungsvorrichtung verbunden sind, mit der eine erste Schalthebelbewegung in einer Schaltgasse zum Herausnehmen des bisherigen Ganges (G1, G3, G5, G7) eines ersten Schaltpaketes (53, 54, 55) führt, während eine zweite Schalthebelbewegung in der gleichen Schaltgasse das Einlegen eines neuen Ganges (G2, G4, G6, RG) eines zweiten Schaltpaketes (53, 54, 55) bewirkt, wobei die Konvertierungsvorrichtung **dadurch gekennzeichnet ist, dass** der Schalthebel (35) mit einer axial verschiebbaren und um ihre Längsachse verschwenkbaren Schaltfingerwelle (1) gekoppelt ist, dass die Schaltfingerwelle (1) jeweils eine Öffnung von mit Schaltstangen (10, 11, 12, 13, 14, 56, 57, 58, 59) verbundenen Schaltrahmen (14, 15, 16, 17) durchsetzt, dass an der Schaltfingerwelle (1) wenigstens ein Schaltfinger (2, 3, 4, 5, 6, 7, 8) pro Übersetzungsstufe bzw. je Schaltrahmen (14, 15, 16, 17) angeordnet ist, und dass jeder Schaltrahmen (14, 15, 16, 17) wenigstens eine Aussparung (9, 9a) im Bereich seiner Öffnung aufweist, der wenigstens ein Schaltfinger (2, 3, 4, 5, 6, 7, 8) zugeordnet ist.

2. Schaltvorrichtung nach Anspruch 1, **dadurch gekennzeichnet, dass** bei einer Axialverschiebung der Schaltfingerwelle (1) zur Anwahl einer Schaltgasse wenigstens ein Schaltfinger (2, 3, 4, 5, 6, 7, 8) in eine Aussparung (9, 9a) eines der Schaltrahmen (14, 15, 16, 17) greift, und dass bei einer Radialverschwenkung (19) der Schaltfingerwelle (1) um ihre Längsachse zum Einlegen oder Herausnehmen eines Getriebeganges (GR, G1, G2, G3, G4, G5, G6, G7) der wenigstens eine Schaltfinger (2, 3, 4, 5, 6, 7, 8) den Schaltrahmen (14, 15, 16, 17) axial verschiebt.

3. Schaltvorrichtung nach Anspruch 1 oder 2, **dadurch gekennzeichnet , dass** die Öffnung und/oder die Außengeometrie der Schaltrahmen (14, 15, 16, 17) im wesentlich oval, kreisförmig oder rechteckig ausgebildet ist.

4. Schaltvorrichtung nach Anspruch 3, **dadurch gekennzeichnet, dass** die Schaltstangen (10, 11, 12, 13, 14, 56, 57, 58, 59) und Schaltrahmen (14, 15, 16, 17) als ein gemeinsames Bauteil, vorzugsweise als Blechstanzteil, ausgebildet sind.

5. Schaltvorrichtung nach einem oder mehreren der vorhergehenden Ansprüche, **dadurch gekennzeichnet, dass** die Schaltstangen (10, 11, 12, 13, 14, 56, 57, 58, 59) oder Schaltrahmen (14, 15, 16, 17) zur Betätigung der Schaltmittel der Schaltpakete (53, 54, 55) mit Schaltgabeln oder Schaltschwingen verbunden sind, die in auf Getriebewellen axial verschiebbar und drehfest angeordnete Schiebemuffen greifen.

6. Schaltvorrichtung nach wenigstens einem der vorhergehenden Ansprüche, **dadurch gekennzeichnet , dass** jedem Schaltrahmen (14, 15, 16, 17) zwei Schaltfinger auf der Schaltfingerwelle (1) zugeordnet sind.

7. Schaltvorrichtung nach Anspruch 6, **dadurch gekennzeichnet, dass** die beiden einem jeden Schaltrahmen (14, 15, 16, 17) zugeordneten Schaltfinger (2, 3, 4, 5, 6, 7, 8) am gleichen Ort auf der Schaltfingerwelle (1) oder axial hintereinander derart angeordnet sind, dass die Schaltfinger (2, 3, 4, 5, 6, 7, 8) radial in die gleiche oder in entgegengesetzte Richtung weisen.

8. Schaltvorrichtung nach wenigstens einem der vorhergehenden Ansprüche, **dadurch gekennzeichnet , dass** die Schaltrahmen (14, 15, 16, 17) mit ihren Schaltstangen (10, 11, 12, 13, 14, 56, 57, 58, 59) in der Konvertierungsvorrichtung zum Betätigen des Rückwärtsganges (RG) und gegebenenfalls eines siebten Ganges (G7), des ersten und dritten Ganges (G1, G3), des vierten und fünften Ganges (G4, G5) sowie des zweiten und sechsten Ganges (G2, G6) ausgebildet und bezüglich der Schaltfingerwelle (1) axial hintereinander angeordnet sind.

9. Schaltvorrichtung nach wenigstens einem der vorhergehenden Ansprüche, **dadurch gekennzeichnet , dass** die Aussparungen (9, 9a) in den Schaltrahmen (14, 15, 16, 17) so ausgebildet sind, dass diese in Schaltrichtung eine Schaltkontur (22, 27) mit einer im wesentlichen radial ausgerichteten Anschlagfläche und in entgegengesetzter Richtung eine im wesentlichen gekrümmte Freigangkontur (20, 21) aufweisen.

10. Schaltvorrichtung nach wenigstens einem der vorhergehenden Ansprüche, **dadurch gekennzeichnet, dass** die Schaltfinger (2, 3, 4, 5, 6, 7, 8) so ausgebildet sind, dass diese in Schaltrichtung eine Schaltkontur (28) mit einer im wesentlichen radial ausgerichteten Anschlagfläche und in entgegengesetzter Richtung eine im wesentlichen gekrümmte oder zumindest angeschrägte Freigangkontur (29) aufweisen.

11. Schaltvorrichtung nach wenigstens einem der vorhergehenden Ansprüche, **dadurch gekennzeichnet, dass** an den Schaltfingern (2, 3, 4, 5, 6, 7, 8) und/oder an den den Schaltfingern zugeordneten Stellen der Schaltfingerwelle (1) Vertiefungen (23) ausgebildet sind, in die ein Sperrmittel (24) zur Freigabe eines Schaltvorgangs für eine Gangstufe eingreift, während die anderen Gangstufen verriegelt sind.

12. Schaltvorrichtung nach Anspruch 11, **dadurch gekennzeichnet , dass** das Sperrmittel (24) als ein am Schaltrahmen (14, 15, 16, 17) ausgebildeter und in Richtung zur Schaltfingerwelle (1) weisender Nocken ausgebildet ist.

13. Schaltvorrichtung nach Anspruch 11, **dadurch gekennzeichnet , dass** die Vertiefungen (23) an den Schaltfingern (2, 3, 4, 5, 6, 7, 8) und/oder an der Schaltfingerwelle (1) schräge Seitenwände (25) aufweisen.

14. Schaltvorrichtung nach wenigstens einem der vorhergehenden Ansprüche, **dadurch gekennzeichnet, dass** dem Schalthebel (35) ein Schaltbild zugeordnet ist, das als "H" oder als mehrfaches "H" ausgebildet ist.

15. Schaltvorrichtung nach wenigstens einem der vorhergehenden Ansprüche, **dadurch gekennzeichnet, dass** bei einem axialen Verschieben (Pfeil 18) der Schaltfingerwelle (1) wenigstens ein Schaltfinger (2, 3, 4, 5, 6, 7, 8) aus einer Eingriffsposition in der Öffnung eines Schaltrahmens (14, 15, 16, 17) herausgebracht wird, während wenigstens ein anderer Schaltfinger (2, 3, 4, 5, 6, 7, 8) in die Öffnung eines anderen Schaltrahmens (14, 15, 16, 17) eintaucht.

16. Schaltvorrichtung nach wenigstens einem der vorhergehenden Ansprüche, **dadurch gekennzeichnet, dass** die Kontur der Aussparung (9, 9a) des Schaltrahmens (14, 15, 16, 17) derart ausgebildet ist, dass über diese das Kraftübersetzungsverhältnis der Schaltvorrichtung eingestellt ist.

17. Schaltvorrichtung nach wenigstens einem der vorhergehenden Ansprüche, **dadurch gekennzeichnet, dass** die Schaltvorrichtung manuell oder mittels hilfskraftgestützter Stellvorrichtungen betätigbar ist.

18. Schaltvorrichtung nach Anspruch 17, **dadurch gekennzeichnet , dass** die Stellvorrichtungen als Kolben-Zylinder-Anordnungen ausgebildet sind.

19. Schaltvorrichtung nach wenigstens einem der vorhergehenden Ansprüche, **dadurch gekennzeichnet, dass** die Schaltfinger (2, 3, 4, 5, 6, 7, 8) unterschiedliche Längen zur Einstellung jeweils gangindividueller Synchronwege aufweisen.

20. Schaltvorrichtung nach wenigstens einem der vorhergehenden Ansprüche, **dadurch gekennzeichnet, dass** der axiale Abstand zwischen zwei Schaltrahmen (60, 61) wenigstens einer Schaltfingerbreite (84) oder drei Schaltfingerbreiten (84) entspricht.

21. Schaltvorrichtung nach wenigstens einem der vorhergehenden Ansprüche, **dadurch gekennzeichnet, dass** die Kontur (71, 72, 73) der Schaltrahmen (68) so ausgebildet ist, dass diese in der Schaltkulisse (36) bei einem Schaltgassenwechsel eine Bewegbarkeit (74) des Schalthebels (35) zulässt oder erzeugt, bei der der Schalthebel (35) in der Wählgasse (75) im wesentlichen diagonal bewegbar ist.

22. Schaltvorrichtung nach wenigstens einem der vorhergehenden Ansprüche, **dadurch gekennzeichnet, dass** die Kontur des Eingriffsbereiches (82) der Schaltfinger (81) so ausgebildet ist, dass diese in der Schaltkulisse (36) bei einem Schaltgassenwechsel eine Bewegbarkeit (74) des Schalthebels (35) zulässt oder erzeugt, bei der der Schalthebel (35) in der Wählgasse (75) im wesentlichen diagonal bewegbar ist.

23. Schaltvorrichtung nach wenigstens einem der vorhergehenden Ansprüche, **dadurch gekennzeichnet, dass** die Breite (83) des Eingriffsbereichs (82) der Schaltfinger (81) kleiner ist als die Breite (84) des Schaltfingers (81) im Bereich seiner Nabe oder Öffnung (85).

24. Schaltvorrichtung nach einem der vorhergehenden Ansprüche, **dadurch gekennzeichnet , dass** die Schaltfinger (2 bis 8, 62, 65, 81) auf der Schaltfingerwelle (1) derart angeordnet sind, so dass die Schaltfinger (2 bis 8, 62, 65, 81) in Neutralposition nicht senkrecht zu den Schaltstangen (10 bis 13, 56 bis 59) bzw. Schaltrahmen (14 bis 17, 60, 61, 68) verlaufen.

25. Schaltvorrichtung nach Anspruch 24, **dadurch gekennzeichnet , dass** zum Einlegen eines Gangs durch Betätigung des Schalthebels (35) der betreffende Schaltfinger (2 bis 8, 62, 65, 81) in eine Position verschwenkbar ist, welche im wesentlichen senkrecht zur Schaltstange (10 bis 13, 56 bis 59) bzw. zum Schaltrahmen (14 bis 17, 60, 61, 68) angeordnet ist.

26. Schaltvorrichtung nach einem der Ansprüche 1 bis 23, **dadurch gekennzeichnet , dass** ein Schaltfinger zur Betätigung eines Schaltpakets bzw. zum Ein- und Auslegen von zwei Gängen vorgesehen ist und mit einem Schaltrahmen zusammenwirkt (z. B. Gänge fünf/sechs).

27. Schaltvorrichtung nach Anspruch 26, **dadurch gekennzeichnet , dass** der Schaltfinger zur Betätigung eines Schaltpakets mit einer Aussparung (9) eines Schaltrahmens zusammenwirkt.

28. Schaltvorrichtung nach einem der Ansprüche 26 oder 27, **dadurch gekennzeichnet , dass** der Schaltfinger zur Betätigung eines Schaltrahmens auf der Schaltfingerwelle (1) derart angeordnet ist, so dass der Schaltfinger in Neutralposition im wesentlichen senkrecht zur Schaltstange bzw. zum Schaltrahmen verläuft.

29. Schaltvorrichtung nach einem der Ansprüche 26, 27 oder 28, **dadurch gekennzeichnet , dass** zum Einlegen eines Gangs durch Betätigung des Schalthebels der Schaltfinger in eine Position verschwenkbar ist, welche im wesentlichen nicht senkrecht zur Schaltstange bzw. zum Schaltrahmen angeordnet ist.

30. Schaltvorrichtung nach einem der Ansprüche 26 bis 29, **dadurch gekennzeichnet , dass** vier Gänge mit zwei Schaltfingern schaltbar sind.

31. Schaltvorrichtung nach Anspruch 11, **dadurch gekennzeichnet , dass** die Vertiefungen im wesentlichen als Nuten in Umfangsrichtung auf der Schaltfingerwelle vorgesehen sind, wobei die Nuten sich wenigstens über einen Umfangsabschnitt erstrecken.

32. Schaltvorrichtung nach Anspruch 21 und/oder 22, **dadurch gekennzeichnet , dass** der Bewegungsablauf (74) eines Schalthebels (35) durch die Geometrie der Schaltrahmen und/oder Sperrnocken vorgebbar ist, so dass die Funktion einer Kulisse für einen Handschalthebel durch Schaltrahmen und/oder Sperrnocken abbildbar ist.

33. Schaltvorrichtung nach Anspruch 32, **dadurch gekennzeichnet , dass** der Schalthebel (35) beim Wechsel von einer Gangstufe in einer Schaltgasse zu einer benachbarten Gangstufe in einer anderen Schaltgasse in der Wählgasse (75, 79, 80) einen im wesentlichen diagonalen Weg ausführt.

34. Kraftfahrzeuggetriebe bei dem wenigstens zwei Schaltpakete (53,54,55) jeweils zwei nicht aufeinander folgenden Übersetzungsstufen zugeordnet sind, **dadurch gekennzeichnet, dass** es eine Schaltvorrichtung nach wenigstens einem der Ansprüche 1 bis 33 enthält.

35. Kraftfahrzeuggetriebe nach Anspruch 34, **dadurch gekennzeichnet , dass** dieses ausschließlich Losräder aufweist, denen jeweils Schaltpakete zu deren drehfesten Verbindung mit jeweils einer Getriebewelle zugeordnet sind.

36. Kraftfahrzeuggetriebe nach Anspruch 34 oder 35, **dadurch gekennzeichnet , dass** es als Doppelkupplungsgetriebe ausgebildet ist.

37. Kraftfahrzeuggetriebe nach Anspruch 34 oder 35, **dadurch gekennzeichnet , dass** es einen Doppelkupplungsradsatz mit nur einer Anfahrkupplung (32) enthält.

## Claims

1. The invention relates to a shifting system for a multistep transmission, with at least two shifting packages (53, 54, 55) being assigned to two non-consecutive ratios, with each of these shifting packages (53, 54, 55) being linked to and operable by a shift lever (35) via shifting rods and/or shifting cables, with a shifting pattern being assigned to the shift lever (35), according to which two consecutive ratios are arranged in a shift track largely opposite to each other, with the ratios that are selectable within a shift track being assigned to different shifting packages, and with the shift lever (35) and the shifting packages (53, 54, 55) being linked to a converting mechanism, through which a first shift lever movement in a shift track results in the disengagement of the gear (G1, G3, G5, G7) of a first shifting package (53, 54, 55) while a second shift lever movement in the same shift track results in the engagement of a new gear (G2, G4, G6, RG) of a second shifting package (53, 54, 55), with the converting mechanism being **characterized in that** the shift lever (35) is linked to a shifting-finger shaft (1), which is axially displaceable and rotatable around its longitudinal axis, that the shifting-finger shaft (1) extends through the openings of shifting frames (14, 15, 16, 17) linked to shifting rods (10, 11, 12, 13, 14, 56, 57, 58, 59), that at least one shifting finger (2, 3, 4, 5, 6, 7, 8) per ratio or shifting frame (14, 15, 16, 17) is arranged on the shifting-finger shaft (1), and that each shifting frame (14, 15, 16, 17) features at least one recess (9, 9a) in the area of its opening, to which at least one shifting finger (2, 3, 4, 5, 6, 7, 8) is assigned.

2. A shifting system according to claim 1, **characterized in that** during axial displacement of the shifting-finger shaft (1) for selection of a shift track at least one shifting finger (2, 3, 4, 5, 6, 7, 8) engages with a recess (9, 9a) of one of the shifting frames (14, 15, 16, 17), and that during radial displacement (19) of the shifting-finger shaft (1) around its longitudinal axis for engagement or disengagement of a transmission gear (GR, G1, G2, G3, G4, G5, G6, G7) this one shifting finger (2, 3, 4, 5, 6, 7, 8) axially displaces the shifting frame (14, 15, 16, 17).

3. A shifting system according to claim 1 or 2, **characterized in that** the opening or the outer geometry of the shifting frames (14, 15, 16, 17) is essentially oval, circular, or rectangular.

4. A shifting system according to claim 3, **characterized in that** the shifting rods (10, 11, 12, 13, 14, 56, 57, 58, 59) and shifting frames (14, 15, 16, 17) are designed as a joint component, preferably a sheet-metal stamping.

5. A shifting system according to one or several of the preceding claims, **characterized in that** the shifting rods (10, 11, 12, 13, 14, 56, 57, 58, 59) or shifting frames (14, 15, 16, 17) for actuation of the shifting elements of the shifting packages (53, 54, 55) are linked to shift forks or levers, which engage with sliding sleeves, which are arranged on transmission shafts in axially displaceable and nonrotational manner.

6. A shifting system according to at least one of the preceding claims, **characterized in that** each shifting frame (14, 15, 16, 17) has two shifting fingers on the shifting-finger shaft (1) assigned to it.

7. A shifting system according to claim 6, **characterized in that** each pair of shifting fingers (2, 3, 4, 5, 6, 7, 8) assigned to one of the shifting frames (14, 15, 16, 17) is arranged on the shifting-finger shaft (1) in the same place or axially one after the other in such a way that the shifting fingers (2, 3, 4, 5, 6, 7, 8) point radially in the same or the opposite direction.

8. A shifting system according to at least one of the preceding claims, **characterized in that** the shifting frames (14, 15, 16, 17) with their shifting rods (10, 11, 12, 13, 14, 56, 57, 58, 59) make up the converting mechanism for the actuation of the reverse gear (RG) and possibly also the seventh gear (G7), of the first and third gear (G1, G3), the fourth and fifth gear (G4, G5) as well as the second and sixth gear (G2, G6), and that relative to the shifting-finger shaft (1), they are arranged axially one after the other.

9. A shifting system according to at least one of the preceding claims, **characterized in that** the recesses (9, 9a) in the shifting frames (14, 15, 16, 17) are designed in such a way that in the direction of shifting they feature a shifting contour (22, 27) with an essentially radially orientated abutment face, and that in the opposite direction they feature an essentially curved freewheel contour (20, 21).

10. A shifting system according to at least one of the preceding claims, **characterized in that** the shifting fingers (2, 3, 4, 5, 6, 7, 8) are designed in such a way that in the direction of shifting they feature a shifting contour (28) with an essentially radially orientated abutment face, and that in the opposite direction they feature an essentially curved or at least beveled freewheel contour (29).

11. A shifting system according to at least one of the preceding claims, **characterized in that** the shift fingers (2, 3, 4, 5, 6, 7, 8) and/or the places on the shifting-finger shaft (1) which are assigned to the shifting fingers feature depressions (23), with which a locking element (24) engages for the release of a shifting process for a gear step while the other gear steps are locked.

12. A shifting system according to claim 11, **characterized in that** the locking element (24) is a cam on the shifting frame (14, 15, 16, 17), which points in the direction of the shifting-finger shaft (1).

13. A shifting system according to claim 11, **characterized in that** the depressions (23) on the shifting fingers (2, 3, 4, 5, 6, 7, 8) and/or on the shifting-finger shaft (1) feature sloping side walls (25).

14. A shifting system according to at least one of the preceding claims, **characterized in that** the shift lever (35) has a shifting pattem assigned to it, the layout of which is an "H" or a multiple

15. A shifting system according to at least one of the preceding claims, **characterized in that** axial displacement (arrow 18) of the shifting-finger shaft (1) results in at least one shifting finger (2, 3, 4, 5, 6, 7, 8) being removed from an engagement position in the opening of a shifting frame (14, 15, 16, 17) while at least one other shifting finger (2, 3, 4, 5, 6, 7, 8) extends into the opening of another shifting frame (14, 15, 16, 17).

16. A shifting system according to at least one of the preceding claims, **characterized in that** the contour of the recess (9, 9a) of the shifting frame (14, 15, 16, 17) is designed in such a way that the power transmission ratio of the shifting system is set through its agency.

17. A shifting system according to at least one of the preceding claims, **characterized in that** the shifting system can be actuated manually or by means of power-assisted setting devices.

18. A shifting system according to claim 17, **characterized in that** the setting devices are constituted of piston-cylinder arrangements.

19. A shifting system according to at least one of the preceding claims, **characterized in that** the shifting fingers (2, 3, 4, 5, 6, 7, 8) vary in length for the setting of gear-specific synchronization travels.

20. A shifting device according to at least one of the preceding claims, **characterized in that** the axial distance between two shifting frames (60, 61) corresponds to at least one shifting-finger width (84) or three shifting-finger widths (84).

21. A shifting device according to at least one of the preceding claims, **characterized in that** the contour (71, 72, 73) of the shifting frames (68) is such that it permits or brings about shiftability (74) of the shift lever (35) in the shift gate (36) when shift tracks are changed, with the shift lever (35) being shiftable essentially diagonally in the selector gutter (75).

22. A shifting device according to at least one of the preceding claims, **characterized in that** the contour of the engagement area (82) of the shifting fingers (81) is such that it permits or brings about shiftability (74) of the shift lever (35) in the shift gate (36) when shift tracks are changed, with the shift lever (35) being shiftable essentially diagonally in the selector gutter (75).

23. A shifting device according to at least one of the preceding claims, **characterized in that** the width (83) of the engagement area (82) of the shifting fingers (81) is narrower than the width (84) of the shifting finger (81) in the area of its hub or opening (85).

24. A shifting device according to one of the preceding claims, **characterized in that** the shifting fingers (2 through 8, 62, 65, 81) are arranged on the shifting-finger shaft (1) in such way that the shifting fingers (2 through 8, 62, 65, 81) in neutral position are not arranged vertically relative to the shifting rods (10 through 13, 56 through 59) or the shifting frames (14 through 17, 60, 61, 68).

25. A shifting device according to claim 24, **characterized in that** for the engagement of a gear through actuation of the shift lever (35) the relevant shifting finger (2 through 8, 62, 65, 81) can be swiveled into a position which is essentially vertical relative to the shifting rod (10 through 13, 56 through 59) or the shifting frame (14 through 17, 60, 61, 68).

26. A shifting device according to one of the claims 1 through 23, **characterized in that** one shifting finger is provided for the actuation of a shifting package or for engagement and disengagement of 2 gears, and that it cooperates with a shifting frame (e.g., gears five/six).

27. A shifting device according to claim 26, **characterized in that** the shifting finger for the actuation of a shifting package cooperates with a recess (9) of a shifting frame.

28. A shifting device according to claim 26 or 27, **characterized in that** the shifting finger for the actuation of a shifting frame is arranged on the shifting-finger shaft (1) in such a way that the shifting finger in neutral position is arranged essentially vertically relative to the shifting rod or the shifting frame.

29. A shifting device according to claim 26, 27 or 28, **characterized in that** for the engagement of a gear through actuation of the shift lever the shifting finger can be swiveled into a position which is essentially not vertical relative to the shifting rod or the shifting frame.

30. A shifting device according to one of the claims 26 through 29, **characterized in that** four gears can be shifted with two shifting fingers.

31. A shifting device according to claim 11, **characterized in that** the depressions on the shifting-finger shaft are essentially grooves arranged in circumferential direction, with the grooves extending over at least one circumferential section.

32. A shifting device according to claim 21 and/or 22, **characterized in that** the movement (74) of a shift lever (35) can be defined by the geometry of the shifting frames and/or locking cams, so that the function of a gate for a manual shift lever can be defined by shifting frames and/or locking cams.

33. A shifting device according to claim 32, **characterized in that** when changing from one gear step in a shift track to a neighboring gear step in another shift track in the selector gutter (75, 79, 80), the path of the shift lever (35) is essentially diagonal.

34. A motor-vehicle transmission in which at least two shifting packages (53, 54, 55) are assigned to two non-consecutive ratios, **characterized in that** it contains a shifting device according to at least one of the claims 1 through 33.

35. A motor-vehicle transmission according to claim 34, **characterized in that** it only features idler gears, to each of which shifting packages are assigned for their nonrotational connection with one transmission shaft each.

36. A motor-vehicle transmission according to claim 34 or 35, **characterized in that** it is designed as a twin-dutch transmission.

37. A motor-vehicle transmission according to claim 34 or 35, **characterized in that** it contains a twin-clutch gear set with only one starting clutch (32).

## Revendications

1. Dispositif de commande pour une boîte de vitesses à plusieurs étages dans laquelle au moins deux paquets de commande (53, 54, 55) sont associés respectivement à deux étages de rapports non consécutifs, dans lequel chacun de ces paquets de commande (53, 54, 55) est accouplé à un levier de vitesses (35) par l'intermédiaire de tringles de commande et/ou de câbles de commande, et peut être actionné par ce levier, dans lequel, au levier de vitesses (35) est associé un schéma de commande dans lequel deux étages de rapports successifs sont sensiblement opposés dans une rainure de commande, dans lequel les étages de vitesses qui peuvent être sélectionnés dans une rainure de commande sont associés à des paquets de commande différents, et dans lequel le levier de vitesses (35) et les paquets de commande (53, 54, 55) sont reliés à un dispositif de conversion sous l'action duquel un premier mouvement du levier de vitesses dans une rainure de commande conduit au désenclenchement de la vitesse (G1, G3, G5, G7) enclenchée jusqu'à présent, correspondant à un premier paquet de commande (53, 54, 55), tandis qu'un deuxième mouvement du levier de vitesses dans la même rainure de commande détermine l'enclenchement d'une nouvelle vitesse (G2, G4, G6, RG) correspondant à un deuxième paquet de commande (53, 54, 55), le dispositif de conversion étant **caractérisé en ce que** le levier de vitesses (35) est accouplé à un arbre à doigts de commande (1) mobile en translation axiale et pouvant pivoter autour de son axe longitudinal, **en ce que** l'arbre à doigts de commande (1) traverse une ouverture de chacun de plusieurs cadres de commande (14, 15, 16, 17) reliés à des tringles de commande (10, 11, 12, 13, 14, 56, 57, 58, 59), **en ce que**, sur l'arbre à doigts de commande (1), il est prévu au moins un doigt de commande (2, 3, 4, 5, 6, 7, 8) par étage de rapport, ou par cadre de commande (14, 15, 16, 17), et **en ce que** chaque cadre de commande (14, 15, 16, 17) comporte dans la région de son ouverture au moins un évidement (9, 9a), auquel au moins un doigt de commande (2, 3, 4, 5, 6, 7, 8) est associé.

2. Dispositif de commande selon la revendication 1, **caractérisé en ce que**, lors d'une translation axiale de l'arbre à doigts de commande (1), exécutée pour sélectionner au moins une rainure de commande, au moins un doigt de commande (2, 3, 4, 5, 6, 7, 8) s'engage dans un évidement (9, 9a) d'un des cadres de commande (14, 15, 16, 17) et **en ce que**, lors d'un pivotement radial (19) de l'arbre à doigts de commande (1) autour de son axe longitudinal, exécuté pour enclencher ou désenclencher une vitesse (GR, G1, G2, G3, G4, G5, G6, G7) de la boîte de vitesses, le au moins un doigt de commande (2, 3, 4, 5, 6, 7, 8) déplace le cadre de commande (14, 15, 16, 17) dans la direction axiale.

3. Dispositif de commande selon la revendication 1 ou 2, **caractérisé en ce que** l'ouverture et/ou là géométrie extérieure des cadres de commande (14, 15, 16,17) est sensiblement ovale, circulaire ou rectangulaire.

4. Dispositif de commande selon la revendication 3, **caractérisé en ce que** les tringles de commande (10, 11, 12, 13, 14, 56, 57, 58, 59) et les cadres de commande (14, 15, 16, 17) sont constitués par un composant commun, de préférence par une pièce de tôle découpée.

5. Dispositif de commande selon l'une ou plusieurs des revendications précédentes, **caractérisé en ce que** les tringles de commande (10, 11, 12, 13, 14, 56, 57, 58, 59) ou cadres de commande (14, 15, 16, 17) destinés à l'actionnement des moyens de commande des paquets de commande (53, 54, 55) sont reliés à des fourchettes ou bras oscillants de commande qui sont en prise avec des baladeurs disposés mobiles en translation axiale et bloqués en rotation sur des arbres de la boîte de vitesses.

6. Dispositif de commande selon au moins l'une des revendications précédentes, **caractérisé en ce qu'**à chaque cadre de commande (14, 1.5, 16, 17) sont associés deux doigts de commande prévus sur l'arbre à doigts de commande (1).

7. Dispositif de commande selon la revendication 6, **caractérisé en ce que** les deux doigts de commande (2, 3, 4, 5, 6, 7, 8) associés à chaque cadre de commande (14, 15, 16, 17) sont disposés au même endroit sur l'arbre à doigts de commande (1), ou les uns derrière les autres dans la direction axiale de telle manière que les doigts de commande (2, 3, 4, 5, 6, 7, 8) pointent radialement dans la même direction ou dans des directions opposées.

8. Dispositif de commande selon au moins l'une des revendications précédentes, **caractérisé en ce que**, dans le dispositif de conversion, les cadres de commande (14, 15, 16, 17) avec leurs tringles de commande (10, 11, 12, 13, 14, 56, 57, 58, 59) sont configurés et disposés axialement l'un derrière l'autre relativement à l'arbre à doigts de commande (1) pour l'actionnement de la marche arrière (RG) et éventuellement d'une septième vitesse (G7), des première et troisième vitesses (G1, G3), des quatrième et cinquième vitesses (G4, G5), ainsi que des deuxième et sixième vitesses (G2, G6).

9. Dispositif de commande selon au moins l'une des revendications précédentes, **caractérisé en ce que** les évidements (9, 9a) ménagés dans les cadres de commande (14, 15, 16, 17) sont configurés de manière à présenter, dans la direction de commande, un profil de commande (22, 27) possédant une surface de butée orientée sensiblement radialement et, dans la direction opposée, un profil de passage libre (20, 21) sensiblement courbe.

10. Dispositif de commande selon au moins l'une des revendications précédentes, **caractérisé en ce que** les doigts de commande (2, 3, 4, 5, 6, 7, 8) sont configurés de manière à présenter, dans la direction de commande, un profil de commande (28) qui possède une surface de butée orientée sensiblement radialement et, dans la direction opposée, un profil de passage libre (29) sensiblement courbe ou du moins chanfreiné.

11. Dispositif de commande selon au moins l'une des revendications précédentes, **caractérisé en ce que**, sur les doigts de commande (2, 3, 4, 5, 6, 7, 8) et/ou aux endroits de l'arbre à doigts de commande (1) qui correspondent aux doigts de commande, sont formés des creux (23) dans lesquels un moyen de verrouillage (24) s'engage pour dégager une opération de commande pour un étage de vitesse, pendant que les autres étages de vitesses sont verrouillés.

12. Dispositif de commande selon la revendication 11, **caractérisé en ce que** le moyen de verrouillage (24) est constitué par un bossage formé sur le cadre de commande (14, 15, 16, 17) et qui pointe en direction de l'arbre à doigts de commande (1).

13. Dispositif de commande selon la revendication 11, **caractérisé en ce que** les creux (23) formés sur les doigts de commande (2, 3, 4, 5, 6, 7, 8) et/ou sur l'arbre à doigts de commande (1) comportent des parois latérales obliques (25).

14. Dispositif de commande selon au moins l'une des revendications précédentes, **caractérisé en ce qu'**au levier de vitesses (35) est associée une grille de commande qui présente la forme d'un "H" ou de "H" multiples.

15. Dispositif de commande selon au moins l'une des revendications précédentes, **caractérisé en ce que**, sous l'effet d'une translation axiale (flèche 18) de l'arbre à doigts de commande (1), au moins un doigt de commande (2, 3, 4, 5, 6, 7, 8) peut être éloigné d'une position d'engagement dans l'ouverture d'un cadre de commande (14, 15, 16, 17) pendant qu'au moins un autre doigt de commande (2, 3, 4, 5, 6, 7, 8) plonge dans l'ouverture d'un autre cadre de commande (14, 15, 16, 17).

16. Dispositif de commande selon au moins l'une des revendications précédentes, **caractérisé en ce que** le profil de l'évidement (9, 9a) du cadre de commande (14, 15, 16, 17) est configuré de manière que le rapport de transmission de force du dispositif de commande soit ajusté au moyen de ce profil.

17. Dispositif de commande selon au moins l'une des revendications précédentes, **caractérisé en ce que** le dispositif de commande peut être actionné manuellement ou au moyen de servodispositifs assistés par une force auxiliaire.

18. Dispositif de commande selon la revendication 17, **caractérisé en ce que** les servodispositifs sont constitués par des dispositifs à piston et cylindre.

19. Dispositif de commande selon au moins l'une des revendications précédentes, **caractérisé en ce que** les doigts de commande (2, 3, 4, 5, 6, 7, 8) présentent des longueurs différentes pour l'ajustement des courses des synchroniseurs correspondant individuellement aux vitesses.

20. Dispositif de commande selon au moins l'une des revendications précédentes, **caractérisé en ce que** la distance axiale entre deux cadres de commande (60, 61) correspond au moins à une largeur de doigt de commande (84) ou à trois largeurs de doigts de commande (84).

21. Dispositif de commande selon au moins l'une des revendications précédentes, **caractérisé en ce que** le profil (71, 72, 73) des cadres de commande (68) est configuré de manière que, lors d'un changement de rainure de commande, ce profil admette ou crée une mobilité (74) du levier de vitesses (35) dans la coulisse de commande (36) avec laquelle le levier de vitesses (35) peut se déplacer sensiblement en diagonale dans la rainure de sélection (75).

22. Dispositif de commande selon au moins l'une des revendications précédentes, **caractérisé en ce que** le profil de la région de prise (82) des doigts de commande (81) est configuré de manière que, lors d'un changement de rainure de commande, ce profil admette ou crée une mobilité (74) du levier de vitesses (35) dans la coulisse de commande (36) avec laquelle le levier de vitesses (35) peut se déplacer sensiblement en diagonale dans la rainure de sélection (75).

23. Dispositif de commande selon au moins l'une des revendications précédentes, **caractérisé en ce que** la largeur (83) de la région de prise (82) des doigts de commande (81) est plus petite que la largeur (84) du doigt de commande (81) dans la région de son moyeu ou de son ouverture (85).

24. Dispositif de commande selon l'une des revendications précédentes, **caractérisé en ce que** les doigts de commande (2 à 8, 62, 65, 81) sont disposés sur l'arbre à doigts de commande (1) de tette manière que, dans la position de point mort, les doigts de commande (2 à 8, 62, 65, 81) ne s'étendent pas perpendiculairement aux tringles de commande (10 à 13, 56 à. 59) ni aux cadres de commande (14 à 17, 60, 61, 68).

25. Dispositif de commande selon la revendication 24, **caractérisé en ce que**, pour l'enclenchement'd'une vitesse par actionnement du levier de vitesses (35), le doigt de commande correspondant (2 à 8, 62, 65, 81) peut être amené par pivotement dans une position qui est disposée sensiblement perpendiculairement à la tringle de commande (10 à 13, 56 à 59) ou au cadre de commande (14 à 17, 60, 61, 68).

26. Dispositif de commande l'une des revendications 1 à 23, **caractérisé en ce qu'**il est prévu un doigt de commande, pour l'actionnement d'un paquet de commande ou pour l'enclènchement ou le désenclenchement de deux vitesses, qui coopère avec un cadre de commande (par exemple les vitesses cinq et six).

27. Dispositif de commande selon la revendication 26, **caractérisé en ce que** le doigt de commande prévu pour l'actionnement d'un paquet de commande coopère avec un évidement (9) d'un cadre de commande.

28. Dispositif de commande selon l'une des revendications 26 ou 27, **caractérisé en ce que** le doigt de commande prévu pour l'actionnement d'un cadre de commande est agencé sur l'arbre à doigts de commande (1) de manière que, dans la position de point mort, il s'étende sensiblement perpendiculairement à la tringle de commande ou au cadre de commande.

29. Dispositif de commande selon l'une des revendications 26, 27 ou 28, **caractérisé en ce que**, pour l'enclenchement d'une vitesse par actionnement du levier de vitesses, le doigt de commande peut être amené par pivotement dans une position qui est disposée sensiblement non perpendiculairement à la tringle de commande ou au cadre de commande.

30. Dispositif de commande selon l'une des revendications 26 à 29, c a - ractérisé en ce que quatre vitesses peuvent être commandées avec deux doigts de commande.

31. Dispositif de commande selon la revendication 11, **caractérisé en ce que** les creux sont prévus sur l'arbre à doigts de commande sensiblement sous la forme de gorges dans la direction circonférentielle, les gorges s'étendant au moins sur un segment de la circonférence.

32. Dispositif de commande selon la revendication 21 et/ou 22, **caractérisé en ce que** le déroulement du mouvement (74) d'un levier de vitesses (35) peut être prédéterminé par la géométrie des cadres de commande et/ou des cames de verrouillage, de telle manière que le fonctionnement d'une coulisse prévue pour un levier de vitesses manuel peut être reproduite par des cadres de commande et/ou des cames de verrouillage.

33. Dispositif de commande selon la revendication 32, **caractérisé en ce que**, lors du passage d'un étage de vitesse situé dans une rainure de commande à un étage de vitesses voisin situé dans une autre rainure de commande, le levier de vitesses (35) décrit un trajet sensiblement diagonal dans la rainure de sélection (75, 79, 80).

34. Boîte de vitesses de véhicule automobile dans laquelle au moins deux paquets de commande (53, 54, 55) sont associés respectivement à deux étages de rapports de transmission non consécutifs, **caractérisée en ce qu'**elle comprend un dispositif de commande selon au moins une des revendications 1 à 33.

35. Boîte de vitesses de véhicule automobile selon la revendication 34, **caractérisée en ce qu'**elle comporte exclusivement des pignons fous auxquels sont associés respectivement des paquets de commande qui servent à les rendre solidaires en rotation chacun à un arbre de la boîte de vitesses.

36. Boîte de vitesses de véhicule automobile selon la revendication 34 ou 35, **caractérisé en ce qu'**elle est constituée par une boîte de vitesses à double embrayage.

37. Boîte de vitesses de véhicule automobile selon la revendication 34 ou 35, **caractérisée en ce qu'**elle renferme un train de roues à double embrayage qui ne possède qu'un seul embrayage de démarrage (32).
